(19) Europäisches Patentamt
European Patent Office
Office européen des brevets

(11) **EP 1 933 580 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(51) Int Cl.:
***H04W 36/30*** *(2009.01)*

(21) Anmeldenummer: **07022430.8**

(22) Anmeldetag: **19.11.2007**

(54) **Verfahren und Steuereinheit zur Optimierung eines Entscheidungsprozesses für die Steuerung von Zellwechseln in einem Mobilfunknetz**

Method and operating unit for optimising the decision making process for controlling cell exchange in a mobile telephone network

Procédé et unité de commande pour optimiser un processus décisionnel pour la commande de changements cellulaires dans un réseau téléphonique mobile

(84) Benannte Vertragsstaaten:
**DE FR GB**

(30) Priorität: **14.12.2006 DE 102006059126**

(43) Veröffentlichungstag der Anmeldung:
**18.06.2008 Patentblatt 2008/25**

(73) Patentinhaber: **Rohde & Schwarz Professional Mobile Radio GmbH 31848 Bad Münder (DE)**

(72) Erfinder: **Prahl, Martina 10437 Berlin (DE)**

(74) Vertreter: **Körfer, Thomas et al Mitscherlich & Partner Patent- und Rechtsanwälte Sonnenstrasse 33 80331 München (DE)**

(56) Entgegenhaltungen:
WO-A-03/105520    WO-A-2004/077753
AU-B2- 758 090    US-A1- 2004 072 565

• WANG S S ET AL: "Adaptive handoff method using mobile location information" BROADBAND COMMUNICATIONS FOR THE INTERNET ERA SYMPOSIUM DIGEST, 2001 IEEE EMERGING TECHNOLOGIES SYMPOSIUM ON SEP 10-11, 2001, PISCATAWAY, NJ, USA,IEEE, 10. September 2001 (2001-09-10), Seiten 97-101, XP010575018 ISBN: 0-7803-7161-5
• LAU S S-F ET AL: "Fuzzy logic adaptive handoff algorithm" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, Bd. 1, 13. November 1995 (1995-11-13), Seiten 509-513, XP010607610 ISBN: 0-7803-2509-5

EP 1 933 580 B1

**Beschreibung**

Die Erfindung bezieht sich auf ein Verfahren zur Optimierung eines Entscheidungsprozesses zur Steuerung von Zellwechselprozeduren in einem zellularen Mobilfunknetz und auf eine Steuereinheit zum Einstellen der entsprechenden optimierten Entscheidungskriterien im Mobilfunknetz.

In einem GSM-Mobilfunknetz basiert ein Zellwechsel eines teilnehmenden Endgeräts darauf, dass auf beiden Seiten einer Mobilfunkverbindung, die entweder als ein durchgeschalteter Verkehrskanal oder als ein verbindungsloser Signalisierungskanal besteht, in regelmäßigen Abständen die Empfangssituation an der Luftschnittstelle messtechnisch erfasst und ausgewertet wird. Die Ergebnisse dieser messtechnischen Auswertungen werden in regelmäßigen zeitlichen Abständen von dem teilnehmenden Endgerät, in der Regel ein Mobilfunkgerät als Messreport an die bedienende Basisstation bzw. an die Steuerung der bedienenden Basisstation übermittelt. Daraufhin fällt diese eine Entscheidung über eine eventuell durchzuführende Zellwechselprozedur und leitet die dafür notwendigen Maßnahmen ein. Diese Strategie eines "Mobile Assisted Handover" (MAHO) bringt den Nachteil eines erhöhten Signalisierungsaufwands mit sich, so dass sich der Nachrichtenverkehr aufgrund der gesendeten Messreporte und aufgrund der von der Steuerung initiierten, die Durchführung des Zellwechsels betreffenden Signalisierungsnachrichten im Mobilfunknetz erhöht und eventuell anfallender Nutzverkehr behindert wird.

In dem in IEEE Transactions on vehicular technology, Vol.46, No 3, August 1997, Seiten 603-609, publizierten Artikel "A locally optimal handoff Algorithm for cellular communications" beschreiben Venugopal V. Veeravalli et al. einen Entwurf für einen lokal optimalen Entscheidungsprozess bezüglich durchzuführender Zellwechselprozeduren, welcher eine Optimierung der Entscheidungskriterien bei einem Schwellwert-Hysterese-Algorithmus berücksichtigt. Der Optimierungsansatz für den genannten Algorithmus lässt sich als ein Bayes Problem mit dem Ziel, gleichzeitig die Anzahl der Zellwechsel und die Anzahl der verloren gegangenen Verbindungen zu minimieren, formulieren. Das Bayes Problem wird mittels dynamischer Programmierung gelöst, wobei die für die Bestimmung des optimalen Schwellwerts und des optimalen Hysteresewerts notwendigen Feldstärkewerte lediglich abgeschätzt werden.

Auch dieser Ansatz unterstellt einen "Mobil Assisted Handover" (MAHO) und ist daher für ein Bündelfunksystem, insbesondere nach dem TETRA-Standard, nicht geeignet.

Das Dokument WO 03/105520 zeigt ein Verfahren zur Optimierung eines Entscheidungsprozesses für die Steuerung von Zellwechseln in einem zellularen Mobilfunknetz mit zumindest einer Basisstation pro Zelle und mehreren mobilen Endgeräten, die eine Leistungsregelung aufweisen. Das Verfahren umfasst ein periodisches Messen und eine periodische Mittelwertbildung der Empfangsfeldstärke der bedienenden Zelle an der momentanen Position des mobilen Endgeräts. Das Verfahren umfasst ferner ein periodisches Messen und eine periodische Mittelwertbildung der Empfangsfeldstarke mindestens einer neben der bedienenden Zelle liegender Nachbarzelle an der momentanen Position des mobilen Endgeräts. Zudem umfasst das Verfahren eine Durchführung eines Zellwechsels sobald der Mittelwert der Empfangsfeldstärke der bedienenden Zelle am Ort des mobilen Endgeräts unter einen Schwellwert t fällt und gleichzeitig der Mittelwert der Empfangsfeldstärke einer Nachbarzelle am Ort des mobilen Endgeräts den Schwellwert t der bedienenden Zelle um einen Hysteresewert h übersteigt. Darüber hinaus umfasst das Verfahren ein zellenweises Ermitteln eines bedingt optimalen Hysteresewerts h im Mobilfunknetz aus den durch die Leistungsregelung vorgegebenen Empfangsfeldstärkewerten, wobei sich verändernde Bedingungen im Mobilfunknetz berücksichtigt werden. Ferner wird ein zellenweises Einstellen des bedingt optimalen Hysteresewerts h im Mobilfunknetz und eine Durchführen der Entscheidung im jeweiligen mobilen Endgerät für oder gegen einen Zellwechsel unter Berücksichtigung des Schwellwerts t und des bedingt optimalen Hysteresewerts h durchgeführt.

In dem Dokument "Adaptive Handoff Method Using Mobile Location Information" von S.S. (Peter) Wang, Marilynn und Maged Malkawi von dem Nokia Research Center 6000 Connection Drive, Irving, TX 75039 ist in einem ähnlichen Zusammenhang ein Verfahren zur Optimierung eines Entscheidungsprozesses für die Steuerung von Zellwechseln in einem zellularen Mobilfunknetz beschrieben. Dabei wird ein bedingt optimaler Schwellwert t zellenweise ermittelt, eingestellt und zur Durchführung eines Zellwechsels berücksichtigt.

Der Erfindung liegt die Aufgabe zu Grunde einen effektiven Algorithmus zur Optimierung des Entscheidungsprozesses für Zellwechselprozeduren und eine geeignete Steuereinheit zum Einstellen der Entscheidungskriterien der Zellwechselprozedur in einem Mobilfunknetz anzugeben, welcher ohne ein Schätzverfahren auskommt.

Bezüglich der effektiven Zellwechselprozedur wird die genannte Aufgabe erfindungsgemäß gelöst durch die Merkmale des in Anspruch 1 beschriebenen Verfahrens. Im Hinblick auf eine Vorrichtung zum Einstellen der Entscheidungskriterien der Zellwechselprozedur im

Mobilfunknetz wird eine Steuereinheit vorgeschlagen, deren Merkmale in Anspruch 11 angegeben sind.

Vorteilhafte Weiterbildungen des erfindungsgemäßen Verfahrens und der erfindungsgemäßen Steuereinheit sind Gegenstand der auf Anspruch 1 bzw. auf Anspruch 11 rückbezogen Unteransprüche.

Die mit dem erfindungsgemäßen Verfahren erzielten Vorteile bestehen insbesondere darin, dass für einen Schwellwert-Hysterese-Algorithmus zur Steuerung eines Entscheidungsprozesses für stattfindende Zellwechselprozeduren in einem zellularen Mobilfunknetz die optimalen Entscheidungskriterien Schwellwert t und Hysteresewert h, welche jeweils von einer gemeinsamen Variablen c abhängen, zellenweise mittels eines Berechnungsverfahrens ermittelt werden. Für das Berechnungsverfahren, welches in einem mobilen Endgerät bzw. der erfindungsgemäßen Steuereinheit implementiert ist, werden die dafür benötigten Empfangsfeldstärkewerte von der Leistungsregelung des mobilen Endgeräts vorgegeben. Dadurch wird der Optimierungsprozess bezüglich der Entscheidungskriterien vereinfacht, da eine Auswertung von bedingten Wahrscheinlichkeiten für einen eventuellen Zellwechsel im nächsten Abtastschritt bei dem erfindungsgemäßen Verfahren entfällt.

Des Weiteren ist von Vorteil, dass durch das erfindungsgemäße Verfahren zur Optimierung eines Entscheidungsprozesses für die Steuerung von Zellwechseln in einem zellularen Mobilfunksystem zeitlich veränderliche Bedingungen im Mobilfunknetz berücksichtigt werden, indem in die Berechnung der optimierten Entscheidungskriterien - Schwellwert t und Hysteresewert h- die Streuung $\sigma'$ bzw. der Mittelwert $\overline{\sigma}$ der Streuung der gemessenen Empfangsfeldstärke am Ort d des mobilen Endgeräts mit einfließt. Dadurch werden nicht-stationäre Bedingungen, insbesondere nicht-stationäre Bedingungen auf einer langen Zeitskala berücksichtigt. Diese nicht-stationären Bedingungen sind beispielsweise der Einfluss der Jahreszeiten, eine Änderung der Bebauung und auch ein sich änderndes Mobilitätsverhalten der Teilnehmer.

Ferner ist von Vorteil, dass mittels des erfindungsgemäßen Verfahrens bzw. mittels der erfindungsgemäßen Steuereinheit die optimalen Entscheidungskriterien zellenweise eingestellt werden können, wobei der gegenwärtig in einer Zelle des Mobilfunknetzes gültige Schwellwert und der gegenwärtig in einer Zelle des Mobilfunknetzes gültige Hysteresewert von den mittels des erfindungsgemäßen Verfahrens ermittelten optimalen Schwellwert bzw. optimalen Hysteresewert überschrieben werden, so dass eine einfache und zuverlässige Änderung dieser Netzparameter möglich ist.

Zudem ist von Vorteil, dass die erfindungsgemäße Steuereinheit einen integrierten GPS-Empfänger vorsieht, so dass eine Zuordnung der Messdaten zu den geografischen Gegebenheiten, wie Bebauung, Waldgebiet etc erfolgt, indem die Messdaten mit den entsprechenden GPS-Daten in eine Protokolldatei geschrieben werden.

Vorteilhafterweise ist ein Datenauswertemodul ein Bestandteil der erfindungsgemäßen Steuereinheit, so dass die aufgenommenen Funkmessdaten einfach und schnell verarbeitet werden können.

Das Datenauswertemodul der erfindungsgemäßen Steuereinheit unterstützt vorteilhafterweise ein Kommunikationsprotokoll für den Bündelfunk, insbesondere gemäß des TETRA-Standards.

Darüber hinaus ist für die erfindungsgemäße Steuereinheit ein Konfigurationsmodul vorgesehen, wodurch der optimierte Schwellwert und der optimierte Hysteresewert auf der Netzseite eingestellt bzw. geändert werden können.

Das erfindungsgemäße Verfahren mit der erfindungsgemäßen Steuereinheit ist somit ein effektives und schnell einsetzbares Instrument zur Ermittlung und zur Einstellung von verbesserten Parametern, insbesondere von Parametern, welche das Zellwechselverhalten betreffen.

Der Gegenstand der vorliegenden Erfindung wird anhand eines Ausführungsbeispiels, das sich auf Entscheidungsprozesse für Zellwechselprozeduren in einem Mobilfunknetz gemäß des von der ETSI definierten TETRA (Terrestrial Trunked Radio) Standards bezieht, besonders ausgeführt. Sowohl die Verfahrensschritte als auch die Funktionsweise und die der Erfindung zugrunde liegenden Modelle werden beschrieben.

Nachfolgend wird ein Ausführungsbeispiel der Erfindung beschrieben. Zum besseren Verständnis der Erfindung wird die Beschreibung durch die im folgenden aufgeführten Zeichnungen ergänzt und gestützt. In der Zeichnung zeigen:

Fig. 1    einen Hysterese-Schwellwert Entscheidungsprozess mit den Entscheidungskriterien Hysteresewert h, Schwellwert t und der Schwelle $\Delta$;

Fig. 2    die Anzahl der verloren gegangenen Verbindungen ($N_{VV}$) in Abhängigkeit von der Anzahl der durchgeführten Zellwechselprozeduren ($N_{CR}$) bei einem willkürlich gewählten Kostenfaktor c=0,15;

Fig. 3    die Definition des Gaußschen Fehlerintegrals (Q-Funktion) am Beispiel der Zufallsvariablen "Empfangsfeldstärke $P_e$";

Fig. 4    die Abhängigkeit des Schwellwerts t und des Hysteresewerts h vom Kostenfaktor c;

Fig. 5    den Verlauf der Empfangsfeldstärken $P_e$ auf einer geraden Verbindungslinie zwischen den beiden Basisstationen bei konstanter Geschwindigkeit des mobilen Endgeräts;

Fig. 6    die Abhängigkeit der Anzahl der Zellwechselprozeduren ($N_{CR}$) in Abhängigkeit vom Hysteresewert h mit dem Schwellwert t als Scharparameter;

Fig. 7    die Abhängigkeit der Anzahl der verloren gegangenen Verbindungen ($N_{VV}$) in Abhängigkeit vom Hysteresewert h mit dem Schwellwert t als Scharparameter;

Fig. 8 die Anzahl der verloren gegangenen Verbindungen ($N_{VV}$) in Abhängigkeit von der Anzahl der Zellwechselprozeduren ($N_{CR}$) bei einem Hysteresewert h=4 dB;

Fig. 9 die Anzahl der verloren gegangenen Verbindungen ($N_{VV}$) in Abhängigkeit von der Anzahl der Zellwechselprozeduren ($N_{CR}$) für einen Wertebereich von 0,005 bis 0,5 des Kostenfaktors c;

Fig. 10 die Anzahl der verloren gegangenen Verbindungen ($N_{VV}$) in Abhängigkeit von der Anzahl der Zellwechselprozeduren ($N_{CR}$) bei verschiedenen Fensterlängen M;

Fig. 11 einen Vergleich eines lokal optimalen Algorithmus gemäß dem Stand der Technik mit dem erfindungsgemäßen Verfahren, wobei die Fensterlänge M=10 gewählt wurde;

Fig. 12 einen Vergleich eines lokal optimalen Algorithmus gemäß dem Stand der Technik mit dem erfindungsgemäßen Verfahren, wobei die Fensterlänge M=4 gewählt wurde;

Fig. 13 die Gesamtkosten J in Abhängigkeit von der Fensterlänge M und dem Kostenfaktor c;

Fig. 14 die Anzahl der Zellwechsel ($N_{CR}$) in Abhängigkeit vom Kostenfaktor c bei einer Fensterlänge von M=10;

Fig. 15 die Anzahl der verloren gegangenen Verbindungen ($N_{VV}$) in Abhängigkeit vom Kostenfaktor c bei einer Fensterlänge von M=10;

Fig. 16 die Gesamtkosten in Abhängigkeit vom Kostenfaktor c bei einer Fensterlänge von M=10 und

Fig. 17 zwei Ausführungsbeispiele einer erfindungsgemäßen Steuereinheit.

Die Zellwechsel-Entscheidung in TETRA ist vor allem von den Messungen der Empfangsfeldstärke am Ort d des mobilen Endgeräts und den von der Infrastruktur bzw. von den Basisstationen mitgeteilten und im Mobilfunknetz gespeicherten Zellwechsel-Parametern, insbesondere von dem Schwellwert t und dem Hysteresewert h, abhängig.

Zusätzlich zu den beiden oben genannten Zellwechsel-Parametern bzw. Entscheidungskriterien soll die Übertragungsqualität in Form der Empfangsfeldstärke ein entscheidendes Merkmal für eine Optimierung des Entscheidungsprozesses zur Steuerung der Zellwechselprozeduren in einem zellularen Mobilfunknetz sein. Dazu wird eine Schwelle $\Delta$ für die Empfangsfeldstärke als ein drittes Entscheidungskriterium eingeführt. Die Schwelle $\Delta$ ist ein Maß für die Übertragungsqualität der im Mobilfunknetz übertragenen Nachrichten, wobei diese so festgelegt ist, dass oberhalb dieser Schwelle $\Delta$ eine zufrieden stellende Funkversorgung der teilnehmenden mobilen Endgeräte gewährleistet ist. Ferner ist eine gute Übertragungsqualität dann gegeben, wenn die Anzahl von verloren gegangenen Verbindungen ($N_{VV}$) gering ist.

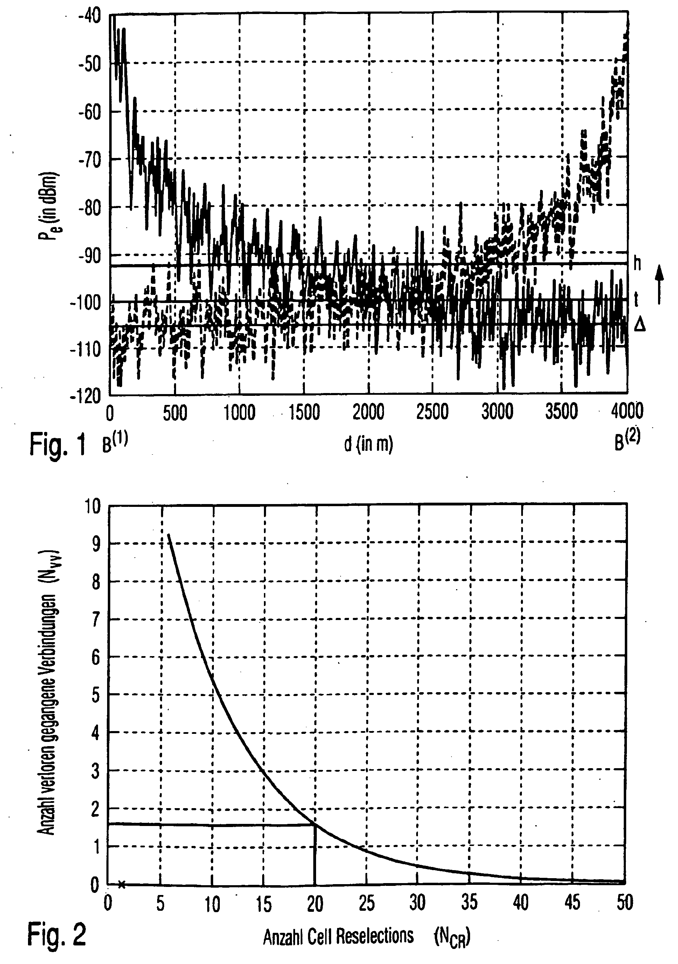

Fig. 1 zeigt den oben skizzierten Hysterese-Schwellwert Algorithmus mit den Entscheidungskriterien Schwellwert t, Hysteresewert h für oder gegen die Durchführung einer Zellwechselprozedur und der Schwelle $\Delta$ für eine gute Funkversorgung. Eine Zellwechselprozedur findet statt, sobald die Empfangsfeldstärke am Ort d des mobilen Endgeräts unter den Schwellwert t fällt und gleichzeitig eine Nachbarzelle den Schwellwert t bzw. die Empfangsfeldstärke $P_e$ am Ort d des mobilen Endgeräts um den Hysteresewert h übersteigt, wobei die Schwelle $\Delta$ für gute Funkversorgung deutlich unterhalb des Schwellwerts t liegt. Dabei muss die Nachbarzelle nicht notwendigerweise direkt neben der bedienenden Zelle liegen, sondern kann auch eine Zelle aus der näheren Umgebung sein, die die Bedingungen für einen Zellwechsel besser erfüllt als eine örtlich direkt benachbarte Zelle.

Die folgenden Ausführungen beziehen sich hauptsächlich auf aus dem Stand der Technik bekannte Überlegungen und dienen als Grundlage für ein besseres Verständnis des vorliegenden erfindungsgemäßen Verfahrens bzw. der vorliegenden erfindungsgemäßen Steuereinheit .

Mit der Einführung der Schwelle $\Delta$ für den Mindestwert der Empfangsfeldstärke $P_e$ bzw. die Übertragungsqualität, lässt sich verhindern, dass ein stattfindender Zellwechsel verzögert wird, da die Schwelle $\Delta$ dafür sorgt, dass die Funkversorgung der teilnehmenden mobilen Endgeräte nicht unter einen definierten Mindestwert fällt bzw. für den Benutzer nicht unakzeptabel schlecht wird.

Die Empfangsfeldstärke $P_e$ am Ort d eines mobilen Endgeräts wird von zwei Faktoren beeinflusst:

dem zeitlich veränderlichen Feldstärkeschwund über eine große Entfernung (large-scale Fading), der sich in Pfadverlust und Abschattung (Shadow Fading) unterteilen lässt, sowie
dem zeitlich veränderlichen Feldstärkeschwund über eine kleine Entfernung (small-scale Fading).

Mit Verweis auf die Mittelung von fünf Empfangsfeldstärkemesswerten zur Beurteilung der Signalqualität bzw. der Empfangsqualität einer Zelle in einem TETRA Mobilfunksystem wird das small-scale Fading für die weiteren Betrachtungen vernachlässigt. Zudem ist es wegen der schnellen Änderungen der Empfangsfeldstärken unmöglich, eine Optimierung der Zellwechselvorgänge bezüglich des small-scale Fadings durchzuführen, da die Adaptionsgeschwindigkeit einer geeigneten Zellwechselstrategie an die schnellen Änderungen der Empfangsfeldstärke in jedem Fall zu langsam ist.

Das Modell, welches den Prozess der Abschattung (Shadow-Fading) beschreibt, bezieht sich auf die folgende Formel:

$$P_e(d) = P_S - 10n \ log(d) + X \qquad\qquad (1)$$

Es definiert die Empfangsfeldstärke $P_e$ unter Berücksichtigung des Pfadverlusts und eines log-normalverteilten Abschattungsprozesses (Shadow Fading), wobei der erste Term $P_s$ die Sendeleistung der Basisstation ist. Die Empfangsfeldstärke bzw. die empfangene Leistung $P_e$ und die gesendete Feldstärke bzw. die Sendeleistung $P_s$ sowie der dritte Term $X$ bezüglich der Abschattung werden in Dezibel angegeben. Der entfernungsabhängige Pfadverlust wird durch den zweiten Term ($10\ n\ log(d)$) der oben aufgeführten Formel beschrieben. Neben der Entfernung d des mobilen Endgeräts von der Basisstation ist der zweite Term vom Pfadverlustexponenten $n$ abhängig. Der Wert des Pfadverlustexponenten n wird durch die Ausbreitungseigenschaften des Mobilfunknetzes bestimmt und liegt typischerweise zwischen 2 und 6 und wird bei der Konfiguration eines zellularen Mobilfunknetzes zellenweise fest eingestellt. Der Pfadverlustexponent n ist ein stationärer umgebungsabhängiger Systemparameter, welcher implizit eine Zellwechselstrategie beeinflusst.

Der dritte Term $X$ beschreibt die Abschattung, die sich durch einen mittelwertfreien, autoregressiven Gauß'schen Zufallsprozess 1. Ordnung beschreiben lässt. Die Abschattungskomponente X wird vor allem durch ihre umgebungsabhängige Standardabweichung σ (unabhängig von der Geschwindigkeit des mobilen Endgeräts) bestimmt. Ein autoregressiver Prozess erster Ordnung (AR-1 Prozess) ist ein Modell zur Beschreibung von large-scale Fading und zeichnet sich dadurch aus, dass ein Anteil $z$ jeweils von einem Zeitreihenwert an den nächsten weitergegeben wird:

$$X_{k+1} = zX_k + w_k \ .$$

Dabei ist $w$ weißes Rauschen.
Für den Term $X$ bezüglich der Abschattung bedeutet dies:

$$X_o = \sigma^2 \ W_0$$

$$X_{k+1} = aX_k + \sigma \sqrt{1-a^2} \ W_k \ .$$

Die Folge $\{W_k\}$ besteht aus stochastisch unabhängigen, identisch verteilten Zufallsvariablen. σ ist die Standardabweichung des Shadow Fadings und $a$ der Korrelationskoeffizient der zeitlichen Abfolge der Abschattungskomponenten $\{X_k\}$. Der Korrelationskoeffizient $a$ wird durch die Geschwindigkeit des mobilen Endgeräts $v$, durch die Abtastzeit $t_s$, d.h. durch die Zeit zwischen dem Messen von zwei zeitlich benachbarten Empfangsfeldstärken und den Korrelationsabstand $d_c$ wie folgt bestimmt:

$$a = exp(-\frac{v \cdot t_s}{d_c})$$

Der Korrelationsabstand $d_c$ entspricht dem Abstand, in dem die räumliche Korrelation unter 50% fällt. Für Entfernungen, die über den Korrelationsabstand $d_c$ hinausgehen, können die Empfangssignale bzw. die Empfangsfeldstärken als unkorreliert angesehen werden. Typische Werte für den Korrelationsabstand liegen zwischen 5m und 150m.

Die Autokorrelationsfunktion AKF der Abschattungskomponente $X$ kann mit

$$E[X(d)X(d+\delta)] = \sigma^2 e^{\frac{v \cdot t}{d_c}} \quad [5]$$

angeben werden und ist isotrop, d.h. sie hängt nur vom Abstand der beiden Orte ab.

Auf Grundlage dieser Betrachtungen lassen sich die wesentlichen Systemparameter angeben, die entsprechend ihres Ursprungs in netzspezifische und umgebungsabhängige Parameter unterteilt werden.

Die netzspezifischen Systemparameter sind die Sendeleistung $P_s$ der Basisstation, der Abstand der Basisstationen $D$ und die Geschwindigkeit des mobilen Endgeräts $v$.

Der Pfadverlustexponent n und die Shadow Fading-Komponente X mit der Standardabweichung $\sigma$ und dem Korrelationsabstand $d_c$ beschreiben die umgebungsabhängigen Systemparameter.

Mit Hilfe der Systemparameter lässt sich nun die Zellwechselprozedur bzw. die Entscheidung für einen Zellwechsel analytisch formulieren. Dazu betrachtet man modellhaft ein Netz mit zwei Basisstationen. $B^{(1)}$ sei die Basisstation BS 1 und $B^{(2)}$ die Basisstation BS 2. Der Weg eines mobilen Endgeräts zwischen den beiden Basisstationen kann in $n$ kleine Schritte, $k = 1,2,..., n$, zerlegt werden, wobei k den jeweiligen Zeitpunkt markiert.

Die bedienende Basisstation zum Zeitpunkt $k$ sei $B_k$ und die jeweils andere $\overline{B_k} \cdot P_{e,k}^{(i)}$, mit $i$ = 1,2, ist die Empfangsfeldstärke in der entsprechenden Zelle zum Zeitpunkt k, wobei i der Index für die betrachtete Basisstation ist und in diesem Modell den Wert 1 oder den Wert 2 hat, da in dem vorgestellten Modell insgesamt nur zwei Basisstationen betrachtet werden.

In jedem Abtastschritt $k$ wird eine Zellwechselentscheidung getroffen. Die Entscheidungsvariable $U_k$ kann zwei Werte annehmen. Ist $U_k$ = 1, findet ein Zellwechsel statt, so dass $B_{k+1} = \overline{B_k}$ ist. Ist $U_k$ = 0, so findet kein Zellwechsel statt und die bedienende Basisstation behält ihre Funktion bei, wobei $B_{k+1} = B_k$.

Informationen zum Netzzustand im aktuellen Zeitpunkt $k$ lassen sich durch den Zustandsvektor $S_k$ beschreiben. Insgesamt stehen zum Zeitpunkt $k$ die Informationen

$$I_k = \left( S_k, S_{k-1}, S_{k-2}, ..., S_1 \right)$$

für die Zellwechselentscheidung zur Verfügung. Die analytische Verknüpfung der Informationen $I_k$ mit der Entscheidungsvariablen $U_k$ erfolgt über die Entscheidungsfunktion $\phi_k$ mit folgender Zuordnung

$$U_k = \phi_k \left( I_k \right)$$

Die Zellwechselgestaltung und -optimierung erfordert demnach die Wahl einer geeigneten Entscheidungsfunktion $\phi_k$. Die zeitliche Abfolge von Entscheidungsfunktionen $\Phi = \{\phi_k(\cdot)\}$ legt somit die Zellwechselstrategie fest.

Im TETRA-Standard ist für die Zellwechselentscheidung ein Hysterese-Schwellwert-Algorithmus vorgesehen, der die Entscheidungsfunktion $\phi_k$ beschreibt. Die ausschlaggebenden Informationen sind folglich die Empfangsfeldstärken $P_{e,k}^{(i)}$, die aktuell bedienende Zelle $B_k$ sowie der Schwellwert $t$ und der Hysteresewert $h$. Dies ist auch in Fig. 1 verdeutlicht.

Der Zustandsvektor lässt sich durch

$$S_k = \begin{pmatrix} P_{e,k}^{(1)} \\ P_{e,k}^{(2)} \\ B_k \\ t \\ h \end{pmatrix}$$

mit

$$P_{e,k}^{(i)} = P_s^{(i)} - 10n \log d_k^{(i)} + X_{\cdot}^{(i)}, \qquad i = 1,2$$

beschreiben, unter Berücksichtigung des Shadow Fadings, gemäß der Formel (1).

Eine Zellwechselprozedur findet statt, wenn die Empfangsfeldstärke der bedienenden Zelle $P_{e,k}^{(B_k)}$ unter einen im System konfigurierten Schwellwert $t$ fällt und eine Nachbarzelle die Empfangsfeldstärke der bedienenden Zelle um einen Wert $h$ überbietet, der um den Betrag h (Hysteresewert h) größer ist als der Schwellwert t. Somit werden die netzspezifischen Systemparameter um die Parameter Schwellwert $t$ und Hysteresewert $h$ erweitert. Die Zellwechsel-entscheidungsfunktion $\phi_k$ lässt sich demnach durch die folgende Formel für die Entscheidungsvariable $U_k$

$$U_k = \begin{cases} 1 & \left( P_{e,k}^{(B_k)} < t \right) \,\&\, \left( P_{e,k}^{(\overline{B_k})} \right) > P_{e,k}^{(B_k)} + h \\ 0 & sonst \end{cases}$$

ausdrücken. Die Zellwechsel-Parameter Schwellwert t und Hysteresewert h beschreiben vollständig die Zellwechsel-strategie $\Phi = \Phi_{TETRA}(h,t)$ für den Hysterese-Schwellwert-Algorithmus in einem TETRA Mobilfunknetz.

Wie bereits erwähnt, sollen die Anzahl der Zellwechselprozeduren ($N_{CR}$) und die Anzahl der verloren gegangenen Verbindungen ($N_{VV}$) die entscheidenden Kriterien für die Optimierung der Zellwechsel-Parameter Schwellwert t und Hysteresewert h im erfindungsgemäßen Verfahren sein.

Analog zur Entscheidungsvariablen $U_k$ für die Zellwechsel lässt sich eine Entscheidungsvariable für verloren gegangene Verbindungen ($N_{VV}$) $V_k$ wie folgt definieren.

$$V_k = \begin{cases} 1 & P_{e,k}^{(B_k)} < \Delta \\ 0 & P_{e,k}^{(B_k)} \geq \Delta \end{cases}$$

Eine Verbindung geht verloren, wenn die Empfangsfeldstärke der bedienenden Zelle $P_{e,k}^{(B_k)}$ unter die Schwelle $\Delta$ für zufrieden stellende Funkversorgung fällt.

Eine Zellwechselprozedur findet immer statt, wenn $U_k=1$ ist; und eine Verbindung geht verloren, wenn $V_k=1$. Daraus lassen sich die Anzahl der Zellwechsel ($N_{CR}$) und die Anzahl der verloren gegangenen Verbindungen ($N_{VV}$) wie folgt bestimmen.

$$E\{N_{CR}\} = E\left\{\sum_{k=1}^{n} U_k\right\}$$

$$E\{N_{VV}\} = E\left\{\sum_{k=1}^{n} V_k\right\}$$

Das Ziel der gleichzeitigen Minimierung von Zellwechseln und verloren gegangenen Verbindungen ($N_{VV}$) führt auf eine Bayes-Formulierung des Problems der Form

$$\min_{\Phi}\left(c \cdot E\{N_{CR}\} + E\{N_{VV}\}\right) \quad mit \quad c > 0$$

Der Kostenfaktor $c$ dient zur Relativierung der Kosten für einen Zellwechsel im Vergleich zu einer verloren gegangenen Verbindung. Zwar sollen beide minimiert werden, jedoch wiegt eine verloren gegangene Verbindung mehr als ein Zellwechsel, der zur Aufrechterhaltung der Verbindung in Kauf genommen wird.

In Fig. 2 ist die Anzahl der Zellwechselprozeduren ($N_{CR}$) gegen die Anzahl der verloren gegangenen Verbindungen ($N_{VV}$) in Abhängigkeit vom Kostenfaktor $c$ entlang eines geradlinigen Weges zwischen zwei Basisstationen dargestellt, wobei die zugrunde liegenden Daten mittels einer geeigneten Simulation ermittelt wurden. So ereignen sich bei einem Kostenfaktor $c = 0,15$ beispielsweise ungefähr 20 Zellwechsel und durchschnittlich gehen 1,76 Verbindungen verloren. Mit wachsendem Kostenfaktor $c$ nimmt die Anzahl der Zellwechsel ab und die Anzahl der verloren gegangenen Verbindungen ($N_{VV}$) zu.

Ein Ziel einer Optimierung ist es auch, einen geeigneten Kostenfaktor zu finden, welcher die in Fig. 2 gezeigte Kurve auf den Punkt (1,0) abbildet, der bei nur einer durchgeführter Zellwechselprozedur keine verloren gegangene Verbindung aufweist. Auf einer geradlinigen Verbindung zwischen zwei Basisstationen ist somit keine verloren gegangene Verbindungen ($N_{VV}$) und genau eine durchgeführte Zellwechselprozedur ($N_{CR}$) ideal.

Fig. 2 zeigt, dass diese Konstellation auch durch Veränderung der Systemparameter und damit Verschiebung der Kurve in der Ebene nicht herzustellen ist. Eine Optimierung geht auch davon aus, dass eine Kombination von Systemparametern, in diesem Fall die Zellwechsel-Parameter Hysteresewert h und Schwellwert t, existieren, die das beschriebene Minimierungsproblem löst.

Eine genannte Lösung dieses Problems ergibt sich aus dem lokal optimalen Algorithmus, welcher in der eigens diskutierten IEEE Publikation mit dem Titel "A locally optimal handoff Algorithm for cellular communications" diskutiert wurde:

Dieser Stand der Technik geht davon aus, dass bei bekannten aktuellen und vergangenen Empfangsfeldstärkemesswerten die Empfangsfeldstärke zum Zeitpunkt $k + 1$ abgeschätzt werden kann und daraus eine Zellwechselentscheidung abgeleitet werden kann. Dabei wird das Bayes-Problem mittels dynamischer Programmierung gelöst.

Dem oben zitierte Artikel liegt dabei das Modell zugrunde, das bereits kurz beschrieben wurde und ein Mobilfunknetz mit zwei Basisstationen, $B^{(1)}$ und $B^{(2)}$ umfasst, wobei sich in dem modellierten Mobilfunknetz ein mobiles Endgerät mit konstanter Geschwindigkeit $v$ bewegt. Zur Bestimmung der Empfangsfeldstärke wird das bereits beschriebene Shadowing-Modell (Formel (1)) herangezogen. Der Zustandsvektor zum Zeitpunkt k umfasst die Informationen

$$S_k = \begin{pmatrix} P_{e,k}^{(1)} \\ P_{e,k}^{(2)} \\ B_k \end{pmatrix},$$

d.h. die Empfangsfeldstärken der zweier benachbarter Zellen, wovon eine Zelle die bedienende Zelle ist. Insgesamt stehen zum Zeitpunkt $k$ wieder alle Informationen

$$I_k = \left(S_k, S_{k-1}, S_{k-2}, \ldots, S_1\right)$$

für eine Zellwechsel-Entscheidung zur Verfügung. Außerdem werden die Feldstärkewerte zum Zeitpunkt k + 1 mit

$$P_{e,k+1}^{(i)} = P_{e,k}^{(i)} - 10n \log d_{k+1}^{(i)} + 10n \log d_k^{(i)} + X_{k+1}^{(i)} - X_k^{(i)}$$

geschätzt. Unter Annahme des Shadowing-Modells (Formel (1)) ist die Verteilung der k+1 Empfangsfeldstärke $P'_{e,k+1}$ gauß-verteilt, mit bedingten Erwartungswerten und Varianzen, die durch die folgende Formel beschrieben sind:

$$E\left\{P_{e,k+1}^{(i)} \middle| I_k\right\} = a P_{e,k+1}^{(i)} + (1-a) P_s^{(i)} - 10n \log\left(\frac{d_{k+1}^{(i)}}{\left(d_k^{(i)}\right)^a}\right),$$

$$Var\left\{P_{e,k+1}^{(i)} \middle| I_k\right\} = \sigma^2 \left(1 - a^2\right),$$

$$mit \ a = \exp\left\{-\frac{vt_s}{d_c}.\right\}$$

Auf dieser Grundlage lässt sich die lokal optimale Entscheidungsfunktion $\phi_{lok}$ zum Zeitpunkt $k$ wie folgt formulieren:

$$U_k \begin{cases} 1 & P\left\{P_{e,k+1}^{(\bar{B}_k)} < \Delta \middle| I_k\right\} + c < P\left\{P_{e,k+1}^{(B_k)} < \Delta \middle| I_k\right\} \\ 0 & P\left\{P_{e,k+1}^{(\bar{B}_k)} < \Delta \middle| I_k\right\} + c > P\left\{P_{e,k+1}^{(B_k)} < \Delta \middle| I_k\right\} \end{cases}.$$

Damit wird bewertet, für welche Zelle die Wahrscheinlichkeit, dass ihre Empfangsfeldstärke $P_{e,k+1}$ am Ort d des mobilen Endgeräts im nächsten Schritt unter die Schwelle $\Delta$ für zufrieden stellende Funkversorgung fällt, kleiner ist. Die Zelle, die diese Bedingung erfüllt wird dann im nächsten Schritt (k+1) zur bedienenden Zelle.

Da es sich bei der Empfangsfeldstärke $P_e$ um eine Zufallsgröße mit der Einheit Dezibel und mit einer Normalverteilung über einem entfernungsabhängigen Mittelwert handelt, kann das Gaußsche Fehlerintegral (Q-Funktion) genutzt werden.

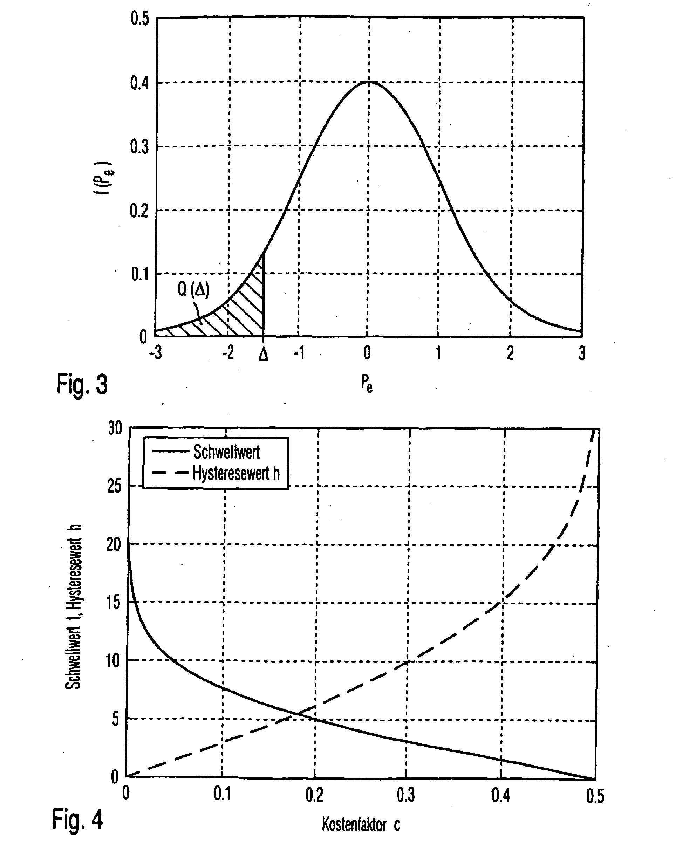

Das in mathematischen Handbüchern tabellierte Gaußsche Fehlerintegral (Q-Funktion) gibt die Wahrscheinlichkeit dafür an, dass eine Zufallsvariable, hier die Empfangsfeldstärke $P_e$ unter eine Schwelle $\Delta$ fällt. Diese Definition ist in Fig. 3 nochmals verdeutlicht, wobei die gezeichnete Kurve der Wahrscheinlichkeitsdichtefunktion nach Gauß entspricht.

Allgemein kann die Wahrscheinlichkeit, dass eine Gaußsche Zufallsvariable $Z$ mit der Standardabweichung $\sigma$ und dem Erwartungswert $\mu_z$ eine Schwelle $\delta$ unterschreitet, mit folgendem mathematischen Formalismus beschrieben werden.

$$P\{Z < \delta\} = \int_{-\infty}^{\delta} f(z)\,dz$$

$$= \int_{-\infty}^{\delta} \frac{1}{\sqrt{2\pi}\,\sigma_z} e^{-\frac{(z-\mu_z)^2}{2\sigma_z^2}}\,dz$$

wobei f(z) die Gaußsche
Wahrscheinlichkeitsdichtefunktion ist.

Die aufgeführten Substitution liefert die folgende Rechnung :

$$t = \frac{z - \mu_z}{\sigma_z}, \quad dz = \sigma_z\,dt$$

$$= \int_{-\infty}^{\frac{\delta - \mu_z}{\sigma_z}} \frac{1}{\sqrt{2\pi}} e^{-\frac{t^2}{2}}\,dt$$

$$= 1 - \int_{\frac{\delta - \mu_z}{\sigma_z}}^{\infty} \frac{1}{\sqrt{2\pi}} e^{-\frac{t^2}{2}}\,dt$$

$$= 1 - Q\left(\frac{\delta - \mu_z}{\sigma_2}\right)$$

$$mit \quad 1 - Q(a) = Q(-a)$$

$$P\{Z < \delta\} = Q\left(\frac{\mu_z - \delta}{\sigma_z}\right)$$

Daraus ergibt sich:

$$P\left\{P_{e,k+1}^{(i)} < \Delta\right\} = Q\left(\frac{P_{e,k+1}^{(i)} - \Delta}{\sigma'}\right) \quad mit \ \sigma' = \sigma\sqrt{1 - a^2}$$

Mit der obigen Gleichung folgt

$$Q\left(\frac{P_{e,k+1}^{(\bar{B})} - \Delta}{\sigma'}\right) + c \overset{u_k=0}{\underset{u_k=1}{\gtrless}} Q\left(\frac{P_{e,k+1}^{(B)} - \Delta}{\sigma'}\right)$$

Die Grenzen des Zellwechselbereichs für den Hysterese-Schwellwert-Algorithmus lassen sich demnach mit

$$Q\left(\frac{P_{e,k+1}^{(\overline{B_k})} - \Delta}{\sigma'}\right) + c = Q\left(\frac{P_{e,k+1}^{(B_k)} - \Delta}{\sigma'}\right)$$

angeben.

Dabei wird nicht mehr die absolute, gemessene Empfangsfeldstärke betrachtet, sondern der vom mobilen Endgerät bestimmte Pfadverlustparameter C1 der als Wert für die Empfangsfeldstärke $P_{e,k}^{(i)}$ verwendet. Dies ist ohne weiteres möglich, da sich der Pfadverlustparameter C1 wie folgt ergibt:

$$C1 = RSSI - RXLEV\_\_ACCESS\_MIN .$$

Wobei der Term "RSSI" einem Indikator für die Empfangsfeldstärke und der Term "*RXLEV_ACCESS_MIN*" der minimalen zulässigen Empfangsfeldstärke für die Anmeldung eines mobilen Endgeräts an einer Basisstation entspricht.

Aus der obigen Formel, die sich auf absolute, dem Wert des RSSI entsprechende Empfangsfeldstärken bezieht ergibt sich folgende Vereinfachung:

$$Q\left(\frac{P_{e,k+1}^{(\overline{B_k})}}{\sigma'}\right) + c = Q\left(\frac{P_{e,k+1}^{(B_k)}}{\sigma'}\right)$$

da sich die Empfangsfeldstärken nun auf die Schwelle $\Delta$ beziehen, welche dem Wert des netzseitigen Parameters RXLEV_ACCESS_MIN entspricht.

*Für* $P_{e,k+1}^{(\overline{B_k})} \rightarrow -\infty$ *ist* Q(-∞)=1, d. h. die Empfangsfeldstärke $P_e$ der Nachbarzelle ist unendlich gering, unabhängig davon, wie weit die Entfernung zur gegenwärtigen bedienenden Zelle $B_k$ beträgt. Es folgt

$$1 + c = Q\left(\frac{P_{e,k+1}^{(B_k)}}{\sigma'}\right),$$

$$\sigma' \cdot Q^{-1}(1 + c) = P_{e,k+1}^{(B_k)}$$

Für die Abschätzung $Q^{-1}(1+c) \approx Q^{-1}(c)$ und für die Aufrechterhaltung der Verbindung im Fall $P_{e,k+1}^{(\overline{B_k})} \rightarrow -\infty$ , wobei die Empfangsfeldstärke der bedienenden Zelle die Bedingung $P_{e,k+1}^{(B_k)} > t$ erfüllen muss, berechnet sich der Schwellwert aus

$$t = \sigma' \cdot Q^{-1}(c). \qquad\qquad (3)$$

Setzt man $P_{e,k+1}^{(\bar{B}_k)} = 0$ bzw. $P_{e,k+1}^{(B_k)} = 0$, d. h. gleich der Schwelle $\Delta$ für zufrieden stellende Funkversorgung, folgt mit $Q(0) = 0{,}5$

$$\sigma' \cdot Q^{-1}(0{,}5 + c) = P_{e,k+1}^{(B_k)}$$

bzw.

$$P_{e,k+1}^{(\bar{B}_k)} = \sigma' \cdot Q^{-1}(0{,}5 - c) .$$

Mit $Q^{-1}(0{,}5\text{-}c) = \text{-}Q^{-1}(0{,}5+c)$ und der Annahme, dass für einen Zellwechsel die Nachbarzelle $\bar{B}_k$ den Schwellwert t der bedienenden Zelle $B_k$ um den Hysteresewert h überbieten muss, ergibt sich der Hysteresewert unter Berücksichtigung des Standes der Technik folgendermaßen:

$$h = P_{e,k+1}^{(\bar{B}_k)} - P_{e,k+1}^{(B_k)}$$

$$h = -2\sigma' \cdot Q^{-1}(0{,}5 + c) \qquad\qquad (4)$$

Der aus dem Stand der Technik hergeleitete Algorithmus setzt jedoch die Kenntnis zukünftiger Empfangsfeldstärkewerte $P_{e,k+1}^{(i)}$ und deren Streuung $\sigma'$ (implizit von der Geschwindigkeit des mobilen Endgeräts abhängig) zum nächsten Zeitpunkt k + 1 voraus, wobei die Streuung $\sigma'$ des Shadow Fadings wie folgt ermittelt wird:

$$\sigma' = \sqrt{C + \frac{R}{2}}$$

$$\text{mit } C = \frac{1}{M-1}\sum_{j}^{M-1}(P_{e,j} - \bar{P}_e)(P_{e,j+1} - \bar{P}_e) \qquad (5)$$

$$\text{und } R = \frac{1}{M-1}\sum_{j}^{M-1}(P_{e,j} - P_{e,j+1})^2$$

M ist die Fensterlänge, über die die Standardabweichung $\sigma'$ geschätzt wird, wobei mit dem Begriff Fensterlänge die Anzahl der betrachteten Empfangsfeldstärkemesswerte gemeint ist. Betrachtet werden kleine Fensterlängen M, da dann der Pfadverlust keinen bedeutenden Einfluss auf die Empfangsfeldstärke hat und die zeitliche Abfolge der Empfangsfeldstärken als AR-1 Prozess angesehen werden, wobei eine Abhängigkeit lediglich zwischen zwei zeitlich aufeinander folgenden Empfangsfeldstärkemesswerten besteht.

In Fig. 4 ist die Abhängigkeit des Schwellwerts t und des Hysteresewerts h vom Kostenfaktor c dargestellt. Mit wachsendem Kostenfaktor c sinkt der Schwellwert t proportional zum Verlauf der inversen Q-Funktion, während der Hysteresewert h gemäß der gespiegelten inversen Q-Funktion steigt. Im Bereich von c≈0,2 liegt der für den aus dem Stand der Technik bekannten Algorithmus lokal optimale Schwellwert t und der lokal optimale Hysteresewert h.

Für die Optimierung der Zellwechsel-Parameter in einem TETRA Mobilfunksystem können wie in dem zitierten IEEE-Artikel kein lokal optimaler Schwellwert t und lokal optimaler Hysteresewerte h verwendet werden, da diese statisch im Mobilfunknetz gespeichert sind (z.B. Slow/Fast Reselect Threshold bzw. Slow/Fast Reselect Hysteresis) und für alle sich in einer Zelle bewegenden mobilen Endgeräte gelten. Somit ist eine Optimierung des Zellwechselverhaltens einzelner mobiler Endgeräte mittels des aus dem Stand der Technik bekannten Algorithmus nicht möglich.

Das vorliegende erfindungsgemäße Verfahren bzw. die erfindungsgemäße Steuereinheit jedoch ermöglicht eine Anpassung bzw. eine Optimierung des Schwellwerts t und des Hysteresewerts h an sich verändernde Umgebungsbedingungen, welche bei der Mittelwertberechnung der Standardabweichung berücksichtigt werden, wobei sich die Abhängigkeit von der Umgebung aus den Pegelmessungen ergibt, die stark von der Umgebung (Bebauung, Wetter etc.) abhängen. Diese Zusammenhänge, d.h. insbesondere der optimale Schwellwert t bzw. der optimale Hysteresewert h ergibt sich aus dem im folgenden beschriebenen Ausführungsbeispiel, das von den folgenden netzspezifischen und umgebungsspezifischen Systemparametern ausgeht:

Abstand der Basisstationen:
(entspricht einem Zellradius von 8 km, typ. für Handfunkgeräte in "rural areas")

$$D = 16000 \text{ m}$$

Sendeleistung der Basisstation:
(entspricht einem Sendepegel von 44 dBm)

$$P_s = 25W$$

Geschwindigkeit der Mobilstation:

$$v = 14 \text{ m/s} \approx 50 \text{ km/h}$$

Pfadverlustexponent:

$$n = 3,$$

Standardabweichung des Shadow Fadings:

$$a = 8$$

Korrelationsabstand:

$$d_c = 30 \text{ m}$$

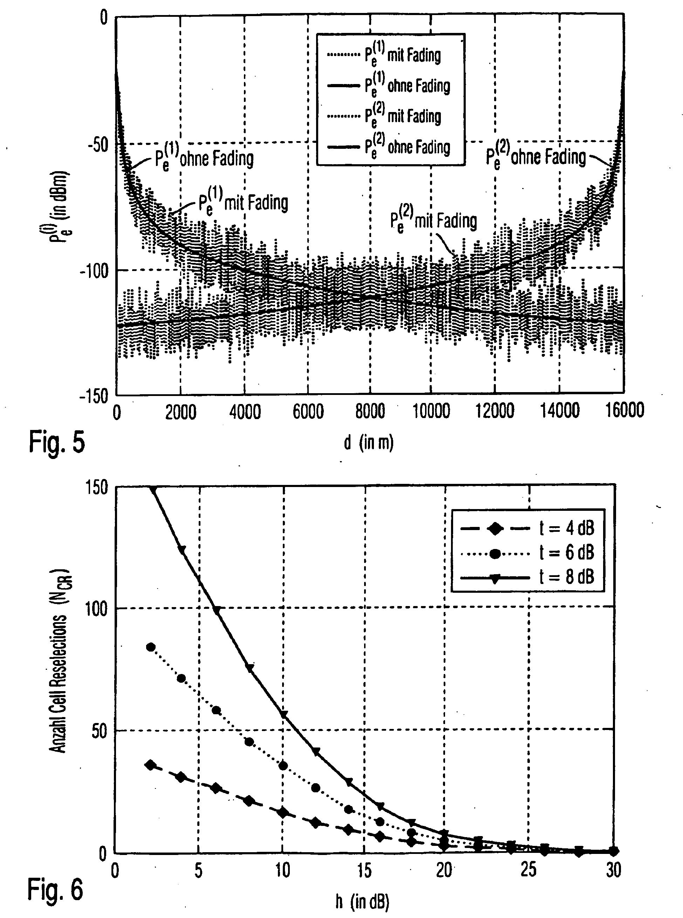

Der Verlauf der Empfangsfeldstärken $P_e$ auf einer geraden Verbindungslinie zwischen den beiden Basisstationen bei konstanter Geschwindigkeit des mobilen Endgeräts ist in Fig. 5 dargestellt.

Eine TETRA-Mobilstation misst jede Sekunde die Empfangsfeldstärken der bedienenden Zelle sowie der Nachbarzellen und mittelt alle 5 Sekunden die vorher gemessenen Empfangsfeldstärken. Zur Bestimmung der optimalen Zellwechsel-Parameter bzw. der optimalen Entscheidungskriterien Schwellwert t und Hysteresewert h stehen nur diese gemittelten Werte zur Verfügung. Daher werden auch im vorliegenden Modell über 5 Sekunden gemittelte Empfangsfeldstärken verwendet.

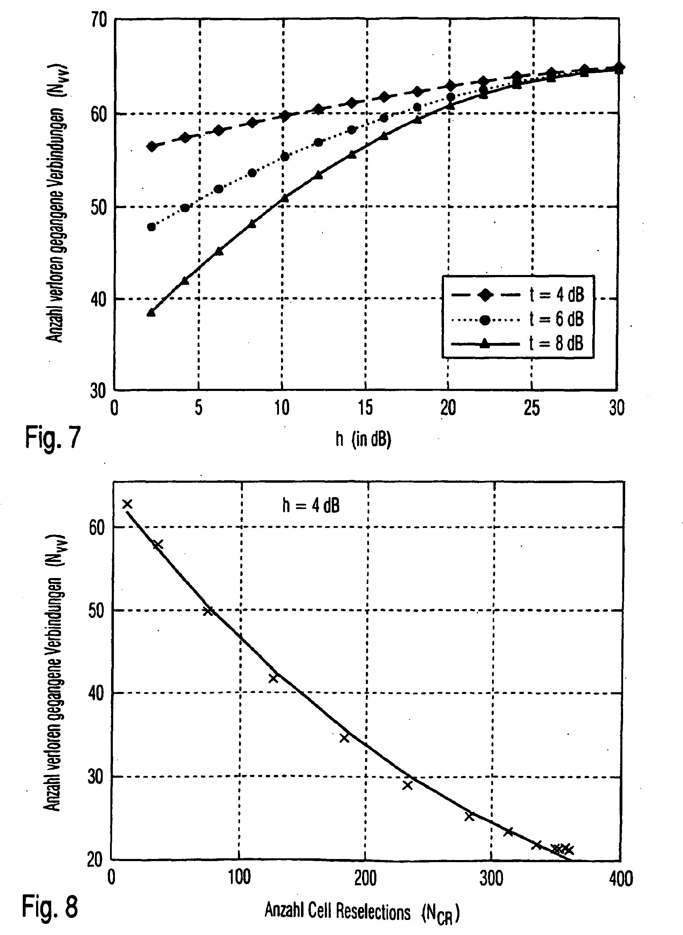

Fig. 5 zeigt die resultierenden Empfangsfeldstärken in Abhängigkeit vom Ort d des mobilen Endgeräts, wobei die gestrichelten Linien das Fading darstellen. Auf dem beschriebenen Weg zwischen den Basisstationen $B^{(1)}$ und $B^{(2)}$ finden in Abhängigkeit von dem optimalen Hysteresewert h und dem optimalen Schwellwert t Zellwechselprozeduren statt bzw. bestehende Verbindungen gehen verloren. Ihre Anzahl ist in Fig. 6 bzw. in Fig. 7 in Abhängigkeit vom Hysteresewert h dargestellt, wobei der Schwellwert t der Scharparameter ist und 4 dB, 6 dB und 8 dB beträgt. Durch Vergrößern des Hysteresewerts h oder bzw. und Reduzieren des Schwellwerts t lässt sich die Anzahl der Zellwechselprozeduren ($N_{CR}$) minimieren. Parallel nehmen jedoch verloren gegangene Verbindungen ($N_{VV}$) zu.

Fig. 6 zeigt die Anzahl der Zellwechselprozeduren ($N_{CR}$) in Abhängigkeit von dem Hysteresewert h für drei verschiedene Schwellwerte t (4 dB, 6 dB und 8 dB) als Scharparameter.

Fig. 7 zeigt die Anzahl der verloren gegangenen Verbindungen ($N_{VV}$) in Abhängigkeit vom Hysteresewert h für verschiedene Schwellwerte t (4 dB, 6 dB und 8 dB) als Scharparameter. Die Gegensätzlichkeit des Schwellwerts t und des Hysteresewerts h und der damit einhergehende Konflikt zwischen der Anzahl der Zellwechselprozeduren ($N_{CR}$) und der Anzahl an verloren gegangenen Verbindungen ($N_{VV}$) ist in Fig. 8 noch einmal zusammengefasst dargestellt.

Fig. 8 zeigt die Anzahl der Zellwechselprozeduren ($N_{CR}$) und der verloren gegangenen Verbindungen *($N_{VV}$)* für einem Hysteresewert h = 4 dB. Wird im Mobilfunknetz ein Hysteresewert von h = 4 dB eingestellt und der Schwellwert t kontinuierlich von t = 2 dB bis t = 30dB erhöht, nimmt die Anzahl verloren gegangener Verbindungen ($N_{VV}$) ab, während immer mehr Zellwechselprozeduren ($N_{CR}$) stattfinden.

Um das Ziel einer möglichst geringen Anzahl von Zellwechselprozeduren ($N_{CR}$) und verloren gegangenen

Verbindungen ($N_{VV}$) zu erreichen, wird der aus dem Stand der Technik bekannte Algorithmus zur Bestimmung lokal optimaler Zellwechselparameter bzw. lokal optimaler Entscheidungskriterien wie Schwellwert t und Hysteresewert h auf ein TETRA Mobilfunksystem angewandt, woraus sich das erfindungsgemäße Verfahren und die erfindungsgemäße Steuereinheit ergeben.

Das erfindungsgemäße Verfahren zur Optimierung eines Entscheidungsprozesses für die Steuerung von Zellwechseln in einem zellularen Mobilfunknetz, wie z.B. einem TETRA Mobilfunknetz umfasst in seiner bevorzugten Ausgestaltung die folgenden Verfahrensschritte, die jedoch nicht alle zwingend erforderlich sind:

- periodisches Messen und periodische Mittelwertbildung der Empfangsfeldstärke der bedienenden Zelle an der momentanen Position des mobilen Endgeräts;
- periodisches Messen und periodische Mittelwertbildung der Empfangsfeldstärke mindestens einer neben der bedienenden Zelle liegender Nachbarzelle an der momentanen Position des mobilen Endgeräts;
- Durchführung eines Zellwechsels sobald der Mittelwert der Empfangsfeldstärke der bedienenden Zelle am Ort des mobilen Endgeräts unter einen Schwellwert t fällt und gleichzeitig der Mittelwert der Empfangsfeldstärke einer Nachbarzelle am Ort des mobilen Endgeräts den Schwellwert t der bedienenden Zelle um einen Hysteresewert h übersteigt;
- zellenweises Ermitteln eines optimalen Schwellwerts t und eines optimalen Hysteresewerts h im Mobilfunknetz aus den durch die Leistungsregelung vorgegebenen Empfangsfeldstärkewerten, wobei sich verändernde Bedingungen im Mobilfunknetz berücksichtigt werden
- zellenweises Einstellen des optimalen Schwellwerts t und des optimalen Hysteresewerts h im Mobilfunknetz
- Ablauf des Entscheidungsprozesses im jeweiligen mobilen Endgerät für oder gegen einen Zellwechsel unter Berücksichtigung des optimalen Schwellwerts t und des optimalen Hysteresewerts h, wobei der optimale Schwellwert t und der optimale Hysteresewert h wie folgt berechnet werden:

Zunächst wird jeweils über eine Fensterlänge M die Standardabweichung σ' der Empfangsfeldstärke gemäß der Formel (5) bestimmt; Nachfolgend werden alle auf der Strecke zwischen $B^{(1)}$ und $B^{(2)}$ ermittelten Standardabweichungen zu σ' gemittelt. Schließlich werden aus der gemittelten Standardabweichung $\overline{\sigma'}$ mit den Formeln (3) und (4) die optimalen Zellwechsel-Parameter berechnet.

$$t = \overline{\sigma'} \cdot Q^{-1}(c) \qquad\qquad (6)$$

$$h = -2\overline{\sigma'} \cdot Q^{-1}(0,5 + c) \qquad\qquad (7)$$

Die erfindungsgemäße Verwendung der gemittelten Standardabweichung $\overline{\sigma'}$ ist erforderlich, da das mobile Endgerät in einem TETRA-System nicht aufgrund von Empfangsfeldstärkemessungen selbstständig und dynamisch die Zellwechsel-Parameter festlegt, sondern diese ihr vom Netz mitgeteilt werden. Das heißt, dass eine erfindungsgemäße Optimierung der Zellwechsel-Parameter nur netzseitig und zellenweise erfolgt. Somit sind zwar keine an den jeweiligen Aufenthaltsort d des mobilen Endgeräts angepasste lokal optimale Lösungen für den Entscheidungsprozess für oder gegen einen Zellwechsel erreichbar. Mittels des erfindungsgemäßen Verfahrens jedoch werden optimale Entscheidungskriterien (Schwellwert t und Hysteresewert h) dynamisch im mobilen Endgerät ermittelt, die eine Anpassung an sich verändernde Umgebungsbedingungen und eine Anpassung an das Mobilitätsverhalten der Anwender unterstützen. Denn veränderte Ausbreitungsbedingungen, z. B. durch jahreszeitliche Schwankungen, oder die Geschwindigkeit der mobilen Endgeräte, spiegeln sich in der nach Formel (5) ermittelten Streuung der Empfangsfeldstärke wider.

Das erfindungsgemäße Verfahren sieht in einer bevorzugten Weiterbildung vor, dass die Empfangsfeldstärken $P_{e,j}$ zur Berechnung der für einen Entscheidungsprozess mit optimierten Entscheidungskriterien, wie Schwellwert t und Hysteresewert h, notwendige Standardabweichung σ' in einem TETRA-Mobilfunksystem von einer im mobilen Endgerät implementierten Leistungsregelung gemäß der Formel (5) vorgegeben werden, wobei die Leistungsregelung als eine innere und/oder prädiktive Leistungsregelung realisiert ist.

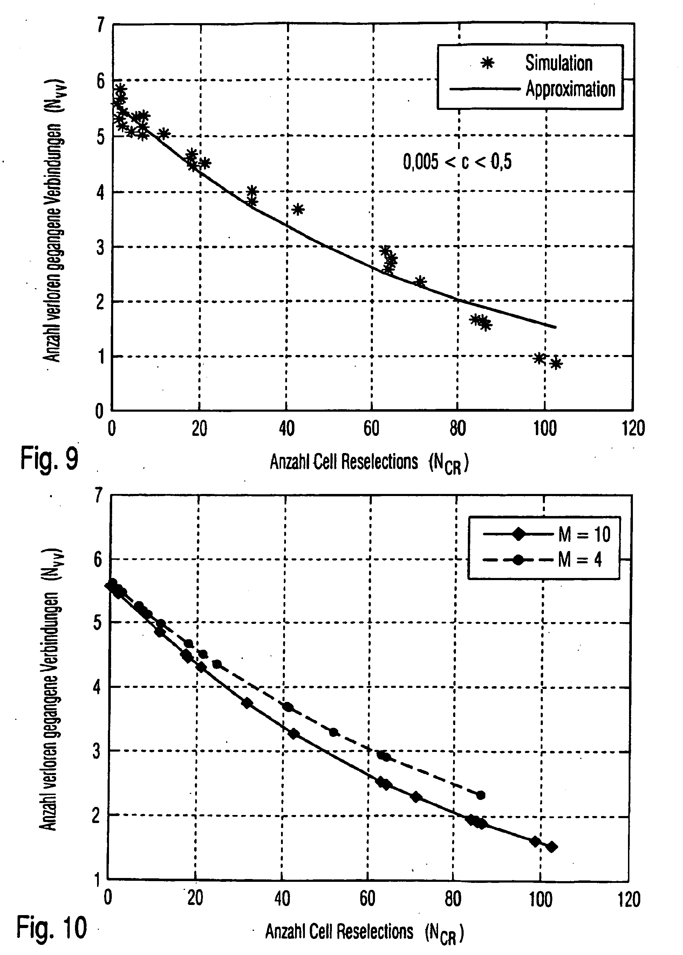

Mit einem Kostenfaktor c im Wertebereich von 0,005 bis 0,5, besonders bevorzugt im Wertebereich von 0,1 bis 0,4, ergibt sich die in Fig. 9 dargestellte Zusammenhang zwischen der Anzahl der Zellwechselprozeduren ($N_{CR}$) und der Anzahl der verloren gegangenen Verbindungen ($N_{VV}$). Der in Fig. 9 dargestellte Zusammenhang ist mittels einer Simulation des beschriebenen Modells bestimmt und anschließend durch eine exponentielle Funktion approximiert worden. Die anschließenden Betrachtungen jedoch ergeben einen günstigen Kostenfaktor c im Wertebereich $c \approx 0,2$.

Die Fensterlänge M ist auf kleine Werte eingeschränkt, da innerhalb eines kurzen Fensters (geringe Fensterlänge) der Pfadverlust keinen bedeutenden Einfluss auf die Empfangsfeldstärke hat. In dem betrachteten Beispiel eines Mobilfunknetzes ist dies bis M = 10 der Fall.

Die bevorzugte Entscheidung für $M$ = 10 wird durch Fig. 10 bestätigt. Fensterlängen von $M$ < 10 liefern schlechtere Ergebnisse und Fensterlängen von $M$ > 10 sind nicht möglich, da dann der Pfadverlust einen merklichen Einfluss auf die Empfangsfeldstärke hat.

Simulativ soll an dieser Stelle der Unterschied zwischen dem aus dem Stand der Technik bekannten Algorithmus und dem erfindungsgemäßen Verfahren zur Optimierung eines Entscheidungsprozesses gezeigt werden.

Entgegen den Gegebenheiten in einem TETRA-System werden aus der Standardabweichung $\overline{\sigma}$ der optimale Schwellwert t und der optimale Hysteresewert h nach den Formeln (6) und (7) berechnet und unmittelbar für die Zellwechsel-Entscheidung herangezogen.

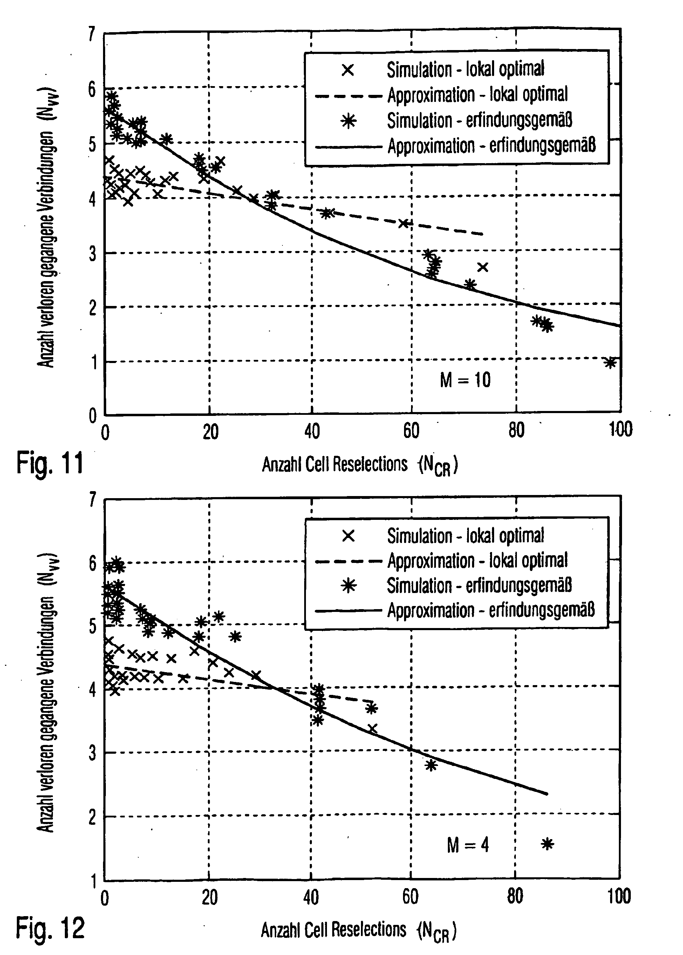

In den Figuren Fig. 11 und Fig. 12 ist erkennbar, dass für kleine Kostenfaktoren c (c < 0, 06 bei $M$ =10 bzw. c < 0,02 bei $M$ = 4) das umgesetzte erfindungsgemäße Verfahren leistungsfähiger ist, als der lokal optimale Algorithmus gemäß dem Stand der Technik.

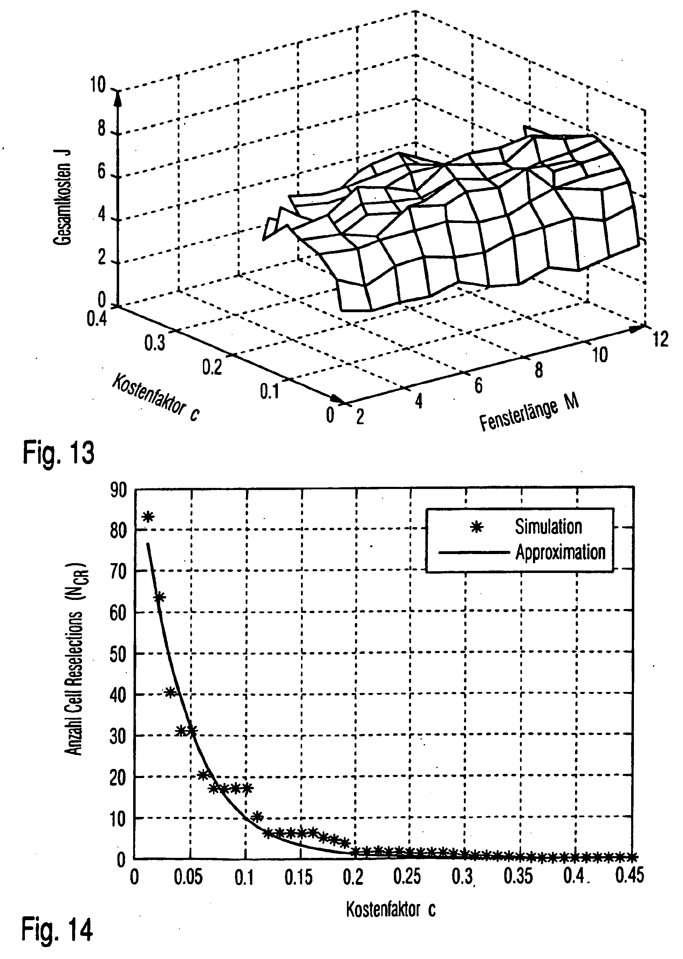

Beschreibt man nun die im System durch Zellwechsel oder verloren gegangene Verbindungen ($N_{VV}$) entstehenden Gesamtkosten in Anlehnung an Formel (7) durch $J = c \cdot N_{CR} + N_{VV}$, lassen sich diese Kosten J wie in Fig. 13 in Abhängigkeit von der Fensterlänge M und dem Kostenfaktor c darstellen.

Fig. 13 zeigt, dass sich ein Minimum der Kosten J für eine Fensterlänge von $M$ = 10 und für sehr kleine Kostenfaktoren c einstellt und, dass vor allem der Kostenfaktor c für das Verhalten des Systems verantwortlich ist, während die Fensterlänge M nur einen geringen Einfluss hat. Für 0,2 > c > 0,5 stellen sich die Gesamtkosten J unabhängig von der Fensterlänge M auf einen relativ konstanten Wert um J ≈ 5,8 ein. Eine Fensterlänge von M= 10 und ein Kostenfaktor von c = 0,01 liefern akzeptable Ergebnisse in dem beschriebenen Ausführungsbeispiel des erfindungsgemäßen Verfahrens.

Eine Gewichtung einer verloren gegangenen Verbindung mit dem Faktor 100 gegenüber einem stattgefundenen Zellwechsel ist für eine flächendeckende Funkversorgung plausibel.

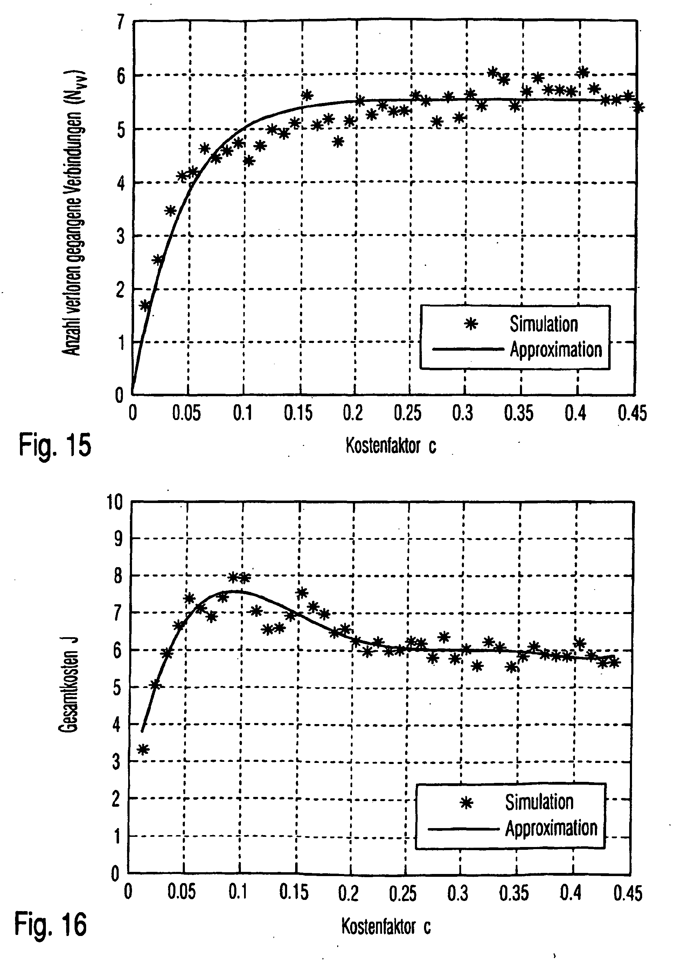

Fig. 14 und Fig. 15 zeigen, dass sowohl die verloren gegangenen Verbindungen ($N_{VV}$) als auch die Anzahl der Zellwechsel ($N_{CR}$) für ein c im Bereich von 0,01 gering sind, aber dennoch ungefähr 80 Zellwechselprozeduren stattfinden. Fig. 15 zeigt, dass die Anzahl der verloren gegangenen Verbindungen ($N_{VV}$) bei einem Kostenfaktor c=0,01 sehr gering ist, was günstig für das Gesamtsystem ist. 80 Zellwechselprozeduren jedoch sind bei diesem Kostenfaktor verhältnismäßig hoch. Die stattfindenden Zellwechselprozeduren ($N_{CR}$) haben jedoch durch den sehr geringen Kostenfaktor c kaum Einfluss auf die entstehenden Gesamtkosten J im System.

Fig. 16 gibt den Verlauf der Gesamtkosten J in Abbhängigkeit vom Kostenfaktor c bei einer Fensterlänge von M = 10 wieder.

Für c > 0,2 schwanken die Gesamtkosten J im System um den Wert $J$ ≈ 5,8. Es gehen durchschnittlich 5,5 Verbindungen verloren und es finden nur sehr wenige Zellwechselprozeduren ($N_{CR}$) statt. Ab c = 0,3 nähert sich die Anzahl der Zellwechselprozeduren ($N_{CR}$) dem Wert Null, so dass der Kostenfaktor c auf einem Wert zwischen 0,2 und 0,3 gesetzt wird, was auch aus Fig. 4 zu entnehmen ist. In diesem Bereich ergeben sich Schwellwerte von t = 4 dB und Hysteresewerte h von 6 dB ≤ $h$ ≤ 10 dB, die in Anlehnung an praktische Erfahrungen für ein TETRA-Mobilfunknetz gebräuchlich sind.

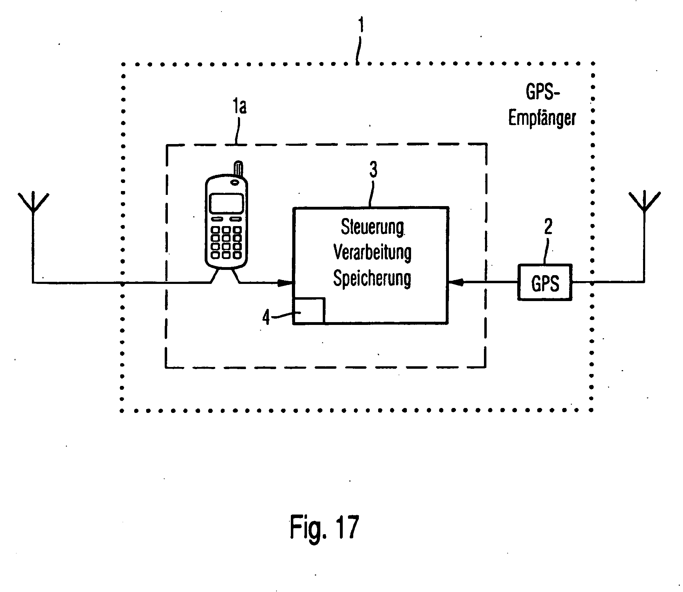

Fig. 17 zeigt zwei Ausführungsbeispiele einer erfindungsgemäße Steuereinheit 1 bzw. 1a zur Optimierung eines Entscheidungsprozesses zur Steuerung von Zellwechseln die in einem zellularen Mobilfunknetz mit zumindest einer Basisstation pro Zelle und mit weiteren mobilen, mit einer Leistungsregelung ausgestatteten Endgeräten. Die erfindungsgemäße Steuereinheit 1, 1a misst und mittelt die Empfangsfeldstärke der bedienenden Zelle an der momentanen Position des mobilen Endgeräts periodisch. Des weiteren misst und mittelt die erfindungsgemäße Steuereinheit 1, 1a die Empfangsfeldstärke mindestens einer Nachbarzelle der bedienenden Zelle an der momentanen Position des mobilen Endgeräts periodisch, und trifft eine Entscheidung für einen Zellwechsel sobald die Empfangsfeldstärke der bedienenden Zelle unter einen Schwellwert t fällt und gleichzeitig die Empfangsfeldstärke der Nachbarzelle am Ort des mobilen Endgeräts den Schwellwert t der bedienenden Zelle um einen Hysteresewert h übersteigt. Ferner stellt die erfindungsgemäße Steuereinheit 1, 1a den optimalen Schwellwert t und den optimalen Hysteresewert h zellenweise und netzseitig ein, wobei der optimale Schwellwert t und der optimale Hysteresewert h sich an verändernde Bedingungen im Mobilfunknetz anpasst.

Die erfindungsgemäße Steuereinheit 1 weist einen integrierten GPS-Empfänger 2 auf, so dass eine Auswertung der Messdaten im Bezug auf örtliche Gegebenheiten während der Messfahrt einfach zu tätigen ist.

Außerdem ist die erfindungsgemäße Steuereinheit 1 mit einem Datenauswertemodul 3 zur Steuerung, Verarbeitung und Speicherung von Funkmessdaten ausgestattet. Das Datenauswertemodul 3 ermöglicht beispielsweise ein Zählen der durchgeführten Zellwechselprozeduren bzw. ein Zählen der verloren gegangenen Verbindungen.

Das Datenauswertemodul 3 der erfindungsgemäßen Steuereinheit 1 unterstützt z.B. die Mobilfunkstandards Standards TETRA, GSM oder UMTS.

Ferner umfasst die erfindungsgemäße Steuereinheit 1 ein Konfigurationsmodul 4 zum netzseitigen Einstellen des mittels des erfindungsgemäßen Verfahrens optimierten Schwellwerts t und des mittels des erfindungsgemäßen Verfahrens optimierten Hysteresewerts h, wobei das Konfigurationsmodul 4 im Datenauswertemodul 3 integriert sein kann.

Die beiden Ausführungsbeispiele 1 bzw. 1a der erfindungsgemäßen Steuereinheit unterscheiden sich dadurch, dass das erste Ausführungsbeispiel 1 einen integrierten GPS-Empfänger aufweist, wohingegen der GPS-Empfänger in jedem Fall an das zweite Ausführungsbeispiel 1a der Steuereinheit angeschlossen werden kann.

Die Erfindung ist nicht auf das für ein TETRA-System beschriebene Ausführungsbeispiel beschränkt, sondern auch auf andere kommerzielle mobile Netzwerke anwendbar. Alle vorstehend beschriebenen und in der Zeichnung dargestellten Merkmale sind beliebig miteinander kombinierbar.

**Patentansprüche**

1.  Verfahren zur Optimierung eines Entscheidungsprozesses für die Steuerung von Zellwechseln in einem zellularen Mobilfunknetz mit zumindest einer Basisstation pro Zelle und mehreren mobilen Endgeräten, die eine Leistungsregelung aufweisen, mit folgenden Verfahrensschritten:

    - periodisches Messen und periodische Mittelwertbildung der Empfangsfeldstärke der bedienenden Zelle an der momentanen Position des mobilen Endgeräts;
    - periodisches Messen und periodische Mittelwertbildung der Empfangsfeldstärke mindestens einer neben der bedienenden Zelle liegender Nachbarzelle an der momentanen Position des mobilen Endgeräts;
    - Durchführung eines Zellwechsels sobald der Mittelwert der 'Empfangsfeldstärke der bedienenden Zelle am Ort des mobilen Endgeräts unter einen Schwellwert t fällt und gleichzeitig der Mittelwert der Empfangsfeldstärke einer Nachbarzelle am Ort des mobilen Endgeräts den Schwellwert t der bedienenden Zelle um einen Hysteresewert h übersteigt,

    **gekennzeichnet durch**
    folgende Verfahrensschritte:

    - zellenweises Ermitteln eines optimalen Schwellwerts t und eines optimalen Hysteresewerts h im Mobilfunknetz aus den **durch** die Leistungsregelung vorgegebenen Empfangsfeldstärkewerten, wobei sich verändernde Bedingungen im Mobilfunknetz berücksichtigt werden und der optimale Schwellwert t und der optimale Hysteresewert h jeweils von einer gemeinsamen Variablen c abhängen;
    - zellenweises Einstellen des optimalen Schwellwerts t und des optimalen Hysteresewerts h im Mobilfunknetz;
    - Durchführen der Entscheidung im jeweiligen mobilen Endgerät für oder gegen einen Zellwechsel unter Berücksichtigung des optimalen Schwellwerts t und des optimalen Hysteresewerts h.

2.  Verfahren nach Anspruch 1,
    **dadurch gekennzeichnet,**
    **dass** der Entscheidungsprozess für die Steuerung von Zellwechseln eine Schwelle $\Delta$ für eine zufrieden stellende bzw. gerade noch ausreichende Funkversorgung der teilnehmenden mobilen Endgeräte berücksichtigt, wobei die Anzahl verloren gegangener Verbindungen ($N_{VV}$) bei der Ermittlung eines optimalen Schwellwerts t und eines optimalen Hysteresewerts h minimiert wird.

3.  Verfahren nach Anspruch 1 oder 2,
    **dadurch gekennzeichnet,**
    **dass** der Entscheidungsprozess mit einem optimalen Schwellwert t und einem optimalen Hysteresewert h auf einem Kostenansatz basiert, wobei eine mit einem Kostenfaktor c gewichtete Anzahl der stattgefundenen Zellwechsel ($N_{CR}$) und eine mit dem Kostenfaktor 1 gewichtete Anzahl der verloren gegangenen Verbindungen ($N_{VV}$) gleichzeitig minimiert werden.

4.  Verfahren nach Anspruch 3,
    **dadurch gekennzeichnet,**
    **dass** der Kostenfaktor c vorzugsweise in einem Wertebereich von 0 bis 0,5, besonders in einem Wertebereich von 0,1 bis 0,4, besonders bevorzugt c≈0,2, gewählt wird.

5.  Verfahren nach einem der Ansprüche 1 bis 4,

**dadurch gekennzeichnet,**
**dass** der Schwellwert t und der Hysteresewert h zunächst folgendermaßen bestimmt wird:

$$h = -2\sigma' \cdot Q^{-1}(0,5+c)$$

$$t = \sigma' \cdot Q^{-1}(c)$$

mit $\sigma'$: implizit von der Geschwindigkeit des mobilen Endgeräts abhängige Standardabweichung
mit $Q^{-1}$: inverse Q-Funktion, wobei die Q-Funktiön dem tabellierten Gaußschen Fehlerintegral entspricht und die Wahrscheinlichkeit angibt, dass die Gaußsche Zufallsvariable "Empfangsfeldstärke" mit der Standardabweichung $\sigma$ und dem Erwartungswert $P_{e,k+1}$ die Schwelle $\Delta$ unterschreitet
mit c: Kostenfaktor.

6. Verfahren nach Anspruch 5,
   **dadurch gekennzeichnet,**

   **dass** die Standardabweichung $\sigma'$ für die Empfangsfeldstärke $P_{e,k}^{(i)}$ der Basisstation i am Ort d des mobilen Endgeräts im lokalen Entscheidungsprozess wie folgt bestimmt wird:

   $$\sigma' = \sqrt{C + \frac{R}{2}}$$

   mit

   $$C = \frac{1}{M-1}\sum_{j}^{M-1}(P_{e,j} - \overline{P_e})(P_{e,j+1} - \overline{P_e})$$

   $$R = \frac{1}{M-1}\sum_{j}^{M-1}(P_{e,j} - P_{e,j+1})^2$$

   wobei M als die Fensterlänge bezeichnet und eine Anzahl der periodisch gemessenen Empfangsfeldstärken angibt und mit

   $P_{e,j}$: aktueller Wert der Empfangsfeldstärke, welcher von der Leistungsregelung des mobilen Endgeräts vorgegeben wird
   $P_{e,j+1}$: der nächste Wert der Empfangsfeldstärke, welcher ebenfalls von der Leistungsregelung des mobilen Endgeräts vorgegeben wird
   $\overline{P_e}$ Mittelwert der Empfangsfeldstärke

7. Verfahren nach Anspruch 6,
   **dadurch gekennzeichnet,**
   **dass** die Empfangsfeldstärken $P_j$ zur Berechnung der für einen Entscheidungsprozess mit optimiertem Schwellwert t und optimiertem Hysteresewert h notwendigen Standardabweichung $\sigma'$ in einem TETRA-Mobilfunksystem von einer im mobilen Endgerät implementierten Leistungsregelung vorgegeben werden.

8. Verfahren nach Anspruch 6 oder 7,

**dadurch gekennzeichnet,**
**dass** der optimale Schwellwert t und der optimale Hysteresewert h für ein Mobilfunknetz wie folgt bestimmt werden:

- Bestimmung der Standardabweichung σ' nach der Formel

$$\sigma' = \sqrt{C + \frac{R}{2}}$$

- Mittelung aller auf einer Strecke zwischen zwei Basisstationen ermittelten σ' zu $\overline{\sigma}$
- Berechnung des optimalen Schwellwerts t und des optimalen Hysteresewerts h mit der gemittelten Standardabweichung $\overline{\sigma}$ gemäß:

$$h = -2\overline{\sigma}' \cdot Q^{-1}(0,5+c)$$

$$t = \overline{\sigma}' \cdot Q^{-1}(c)$$

9. Verfahren nach einem der Ansprüche 1 bis 8,
**dadurch gekennzeichnet,**
**dass** die optimalen Schwellwerte t und Hysteresewerte h adaptiv sind für sich verändernde Umgebungsbedingungen, indem bei der Mittelwertberechnung der Standardabweichung veränderliche Umgebungsbedingungen einfließen.

10. Verfahren nach Anspruch 9,
**dadurch gekennzeichnet,**
**dass** die optimalen Schwellwerte t und Hysteresewerte h für ein sich veränderndes Mobilitätsverhalten der teilnehmenden mobilen Endgeräte adaptiv sind.

11. Steuereinheit (1) zur Optimierung eines Entscheidungsprozesses zur Steuerung von Zellwechseln in einem zellularen Mobilfunknetz mit zumindest einer Basisstation pro Zelle und mit weiteren mobilen, mit einer Leistungsregelung ausgestatteten Endgeräten, wobei die Steuereinheit (1) so eingerichtet ist,
dass sie die Empfangsfeldstärke der bedienenden Zelle an der momentanen Position des mobilen Endgeräts periodisch misst und periodisch mittelt,
dass sie die Empfangsfeldstärke mindestens einer Nachbarzelle der bedienenden Zelle an der momentanen Position des mobilen Endgeräts periodisch misst und periodisch mittelt; und eine Entscheidung für einen Zellwechsel dann trifft, wenn die Empfangsfeldstärke der bedienenden Zelle unter einen Schwellwert t fällt und gleichzeitig die Empfangsfeldstärke der Nachbarzelle am Ort des mobilen Endgeräts den Schwellwert t der bedienenden Zelle um einen Hysteresewert h übersteigt;
**dadurch gekennzeichnet,**
**dass** die Steuereinheit (1) so eingerichtet ist, dass sie zellenweise einen optimalen Schwellenwert (t) und einen optimalen Hysteresewert (h) im Mobilfunknetz aus den durch die Leistungsregelung vorgegebenen Empfangsfeldstärken ermittelt und dass der Hysteresewert h und der Schwellwert t zellenweise und netzseitig einstellbar und an sich verändernde Bedingungen im Mobilfunknetz anpassbar ist und der optimale Schwellwert t und der optimale Hysteresewert h jeweils von einer gemeinsamen Variablen c abhängen.

12. Steuereinheit nach Anspruch 11,
**gekennzeichnet durch**
einen integrierten GPS-Empfänger (2).

13. Steuereinheit nach Anspruch 11 oder 12,
**gekennzeichnet durch**
ein Datenauswertemodul (3) zur Steuerung, Verarbeitung und Speicherung von Funkmessdaten.

**14.** Steuereinheit nach Anspruch 13,
**dadurch gekennzeichnet,**
**dass** das Datenauswertemodul (3) die Standards TETRA, GSM oder UMTS unterstützt.

**15.** Steuereinheit nach einem der Ansprüche 11 bis 14,
**gekennzeichnet,**
**durch** ein Konfigurationsmodul (4) zum netzseitigen Einstellen des optimierten Schwellwerts t und des optimierten Hysteresewerts h.

**Claims**

**1.** A method for optimising a decision-making process for the control of cell reselections in a cellular mobile radio network with at least one base station per cell and several mobile terminal devices, which provide a power regulator, comprising the following procedural stages:

- periodic measurement and periodic averaging of the reception field strength of the operational cell at the momentary position of the mobile terminal device;
- periodic measurement and periodic averaging of the reception field strength of at least one neighbouring cell disposed adjacent to the operational cell at the momentary position of the mobile terminal device;
- implementation of a cell reselection as soon as the mean value of the reception field strength of the operational cell at the position of the mobile terminal device falls below a threshold value t and at the same time the mean value of the reception field strength of a neighbouring cell at the position of the mobile terminal device exceeds the threshold value t of the operational cell by a hysteresis value h,

**characterised by**
the following procedural stages:

- cell-wise determination of an optimal threshold value t and of an optimal hysteresis value h in the mobile radio network from the reception field strength values specified by the power regulator, wherein varying conditions within the mobile radio network are taken into consideration, and the optimal threshold value t and the optimal hysteresis value h depend in each case upon a common variable c;
- cell-wise adjustment of the optimal threshold value t and of the optimal hysteresis value h within the mobile radio network;
- implementation of the decision within the respective mobile terminal device for or against a cell reselection taking into consideration the optimal threshold value t and the optimal hysteresis value h.

**2.** The method according to claim 1,
**characterised in that**
the decision-making process for the control of cell reselections takes into consideration a threshold $\Delta$ for a satisfactory or still sufficient radio supply of the participating mobile terminal devices, wherein the number of lost connections ($N_{VV}$) in the determination of an optimal threshold value t and of an optimal hysteresis value h is minimised.

**3.** The method according to claim 1 or 2,
**characterised in that**
the decision-making process with an optimal threshold value t and an optimal hysteresis value h is based on a costing approach, wherein a number of completed cell reselections ($N_{CR}$) weighted with a cost factor c and a number of lost connections ($N_{VV}$) weighted with the cost factor 1 are simultaneously minimised.

**4.** The method according to claim 3,
**characterised in that**
the cost factor c is preferably selected within a value range from 0 to 0.5, in particular, within a value range from 0.1 to 0.4, by particular preference $c \approx 0.2$.

**5.** The method according to any one of claims 1 to 4,
**characterised in that**
the threshold value t and the hysteresis value h is initially determined as follows:

$$h = -2\sigma' \cdot Q^{-1}(0.5+c)$$

$$t = \sigma' \cdot Q^{-1}(c)$$

with σ': standard deviation implicitly dependent upon the velocity of the mobile terminal device;
with $Q^{-1}$: inverse Q function, wherein the Q function corresponds to the tabulated Gaussian error integral and indicates the probability that the Gaussian random variable "reception field strength" with the standard deviation σ and the expected value $P_{e,k+1}$ falls below the threshold Δ;
with c: cost factor.

6. The method according to claim 5,
**characterised in that**

the standard deviation σ' for the reception field strength $P_{e,k}^{(i)}$ of the base station i at the position d of the mobile terminal device is determined within the local decision-making process as follows:

$$\sigma' = \sqrt{C + \frac{R}{2}}$$

with

$$C = \frac{1}{M-1} \sum_{j}^{M-1} (P_{e,j} - \overline{P}_e)(P_{e,j+1} - \overline{P}_e)$$

$$R = \frac{1}{M-1} \sum_{j}^{M-1} (P_{e,j} - P_{e,j+1})^2$$

wherein M denotes the window length and indicates a number of periodically measured reception field strengths, and with

$P_{e,j}$: current value of the reception field strength, which is specified by the power regulator of the mobile terminal device;
$P_{e,j+1}$: the next value of the reception field strength, which is also specified by the power regulator of the mobile terminal device;
$\overline{P}_e$: mean value of the reception field strength.

7. The method according to claim 6,
**characterised in that**
the reception field strengths $P_j$ are specified for the calculation of the standard deviation σ' required for the decision-making process with optimised threshold value t and optimised hysteresis value h within a TETRA mobile radio system by a power regulator implemented within the mobile terminal device.

8. The method according to claim 6 or 7,

**characterised in that**
the optimal threshold value t and the optimal hysteresis value h are determined for a mobile radio network as follows:

- determination of the standard deviation σ' according to the formula

$$\sigma' = \sqrt{C + \frac{R}{2}}$$

- averaging of all σ' determined on a path between two base stations to form $\bar{\sigma}$;
- calculation of the optimal threshold value t and of the optimal hysteresis value h with the averaged standard deviation $\bar{\sigma}$ according to:

$$h \;=\; -2\bar{\sigma}'\cdot Q^{-1}\,(0.5+c)$$

$$t \;=\; \bar{\sigma}'\cdot Q^{-1}\,(c)$$

9. The method according to any one of claims 1 to 8,
   **characterised in that**
   the optimal threshold value t and hysteresis value h are adaptive for varying environmental conditions, **in that** variable environmental conditions flow into the averaging of the standard deviation.

10. The method according to claim 9,
    **characterised in that**
    the optimal threshold values t and hysteresis values h are adaptive for a variable mobility behaviour of the participating mobile terminal devices.

11. A control unit (1) for optimising a decision-making process for the control of cell reselections in a cellular mobile radio network with at least one base station per cell and with further mobile terminal devices equipped with a power regulator, wherein the control unit (1) is set up in such a manner
    that it periodically measures and periodically averages the reception field strength of the operational cell at the momentary position of the mobile terminal device,
    that it periodically measures and periodically averages the reception field strength of at least one neighbouring cell of the operational cell at the momentary position of the mobile terminal device;
    and then makes a decision regarding a cell reselection, whenever the reception field strength of the operational cell falls below a threshold value t and at the same time, the reception field strength of the neighbouring cell at the position of the mobile terminal device exceeds the threshold value t of the operational cell by a hysteresis value h;
    **characterised in that**
    the control unit (1) is set up in such a manner that it determines in a cell-wise manner an optimal threshold value (t) and an optimal hysteresis value (h) within the mobile radio network from the reception field strengths specified by the power regulator, and that the hysteresis value h and the threshold value t is adjustable in a cell-wise manner and from the network side and can be adapted to varying conditions within the mobile radio network, and the optimal threshold value t and the optimal hysteresis value h each depend upon a common variable c.

12. The control unit according to claim 11,
    **characterised by**
    an integrated GPS receiver (2).

13. The control unit according to claim 11 or 12,
    **characterised by**
    a data evaluation module (3) for the control, processing and storage of measured radio data

**14.** The control unit according to claim 13,
**characterised in that**
the data evaluation module (3) supports the standards TETRA, GSM or UMTS.

**15.** The control unit according to any one of claims 11 to 14,
**characterised by**
a configuration module (4) for the network-side adjustment of the optimised threshold value t and of the optimised hysteresis value h.

**Revendications**

**1.** Procédé d'optimisation d'un processus de décision pour commander des changements de cellule dans un réseau cellulaire de téléphonie mobile avec au moins une station de base par cellule et plusieurs terminaux mobiles présentant une régulation de puissance, comprenant les étapes de procédé suivantes consistant à:

- mesurer périodiquement et calculer périodiquement la moyenne de l'intensité de champ de réception de la cellule de desserte dans la position instantanée du terminal mobile;
- mesurer périodiquement et calculer périodiquement la moyenne de l'intensité de champ de réception d'au moins une cellule voisine située à côté de la cellule de desserte dans la position instantanée du terminal mobile;
- effectuer un changement de cellule dès que la moyenne de l'intensité de champ de réception de la cellule de desserte à l'emplacement du terminal mobile descend sous une valeur de seuil t et qu'en même temps la moyenne de l'intensité de champ de réception d'une cellule voisine à l'emplacement du terminal mobile dépasse la valeur de seuil t de la cellule de desserte d'une valeur d'hystérésis h,

**caractérisé par** les étapes de procédé suivantes:

- déterminer cellule par cellule une valeur de seuil optimale t et une valeur d'hystérésis optimale h dans le réseau de téléphonie mobile à partir des valeurs d'intensité de champ de réception prédéfinies par la régulation de puissance, dans lequel des conditions variables dans le réseau de téléphonie mobile sont prises en compte et la valeur de seuil optimale t et la valeur d'hystérésis optimale h dépendent respectivement d'une variable commune c;
- régler cellule par cellule la valeur de seuil optimale t et la valeur d'hystérésis optimale h dans le réseau de téléphonie mobile;
- exécuter la décision dans le terminal mobile respectif pour ou contre un changement de cellule en prenant en compte la valeur de seuil optimale t et la valeur d'hystérésis optimale h.

**2.** Procédé selon la revendication 1, **caractérisé en ce que** le processus de décision pour commander des changements de cellule prend en compte un seuil $\Delta$ pour une couverture radio satisfaisante ou tout juste encore suffisante des terminaux mobiles abonnés, dans lequel le nombre de communications perdues ($N_{VV}$) est minimisé lors de la détermination d'une valeur de seuil optimale t et d'une valeur d'hystérésis optimale h.

**3.** Procédé selon la revendication 1 ou 2, **caractérisé en ce que** le processus de décision avec une valeur de seuil optimale t et une valeur d'hystérésis optimale h est basé sur une approche orientée coûts, dans lequel un nombre, pondéré par un facteur coûts c, des changements de cellule ($N_{CR}$) ayant eu lieu et un nombre, pondéré par le facteur coûts 1, des communications perdues ($N_{VV}$) sont minimisés en même temps.

**4.** Procédé selon la revendication 3, **caractérisé en ce que** le facteur coûts c est sélectionné de préférence dans une plage de valeurs de 0 à 0,5, en particulier dans une plage de valeurs de 0,1 à 0,4, de façon particulièrement préférée c = 0,2.

**5.** Procédé selon l'une quelconque des revendications 1 à 4, **caractérisé en ce que** la valeur de seuil t et la valeur d'hystérésis h sont d'abord déterminées comme suit:

$$h = -2\sigma' \cdot Q^{-1}(0,5+c)$$

$$t = \sigma' \cdot Q^{-1}(c)$$

avec σ': écart-type dépendant implicitement de la vitesse du terminal mobile,
avec $Q^{-1}$: fonction Q inverse, dans laquelle la fonction Q correspond à l'intégrale de Gauss tabulée et indique la probabilité que la variable aléatoire gaussienne "intensité de champ de réception" avec l'écart-type σ et la valeur attendue $P_{e,k+1}$ passe sous le seuil Δ,
avec c: facteur coûts.

6. Procédé selon la revendication 5, **caractérisé en ce que** l'écart-type σ' pour l'intensité de champ de réception $P_{e,k}^{(i)}$ de la station de base i à l'emplacement d du terminal mobile dans le processus de décision local est déterminé comme suit:

$$\sigma' = \sqrt{C + \frac{R}{2}}$$

avec

$$C = \frac{1}{M-1} \sum_{j}^{M-1} \left( P_{e,j} - \overline{P_e} \right) \left( P_{e,j+1} - \overline{P_e} \right)$$

$$R = \frac{1}{M-1} \sum_{j}^{M-1} \left( P_{e,j} - P_{e,j+1} \right)^2$$

où M désigne la longueur de fenêtre et indique un nombre des intensités de champ de réception mesurées périodiquement,
et avec

$P_{e,j}$: valeur actuelle de l'intensité de champ de réception qui est prédéfinie par la régulation de puissance du terminal mobile,
$P_{e,j+1}$: la valeur suivante de l'intensité de champ de réception qui est également prédéfinie par la régulation de puissance du terminal mobile,
$\overline{P_e}$: moyenne de l'intensité de champ de réception.

7. Procédé selon la revendication 6, **caractérisé en ce que** les intensités de champ de réception $P_j$ pour le calcul de l'écart-type σ'nécessaire à un processus de décision avec une valeur de seuil optimisée t et une valeur d'hystérésis optimisée h sont prédéfinies dans un système de téléphonie mobile TETRA par une régulation de puissance mise en oeuvre dans le terminal mobile.

8. Procédé selon la revendication 6 ou 7, **caractérisé en ce que** la valeur de seuil optimale t et la valeur d'hystérésis optimale h pour un réseau de téléphonie mobile sont déterminées comme suit:

- détermination de l'écart-type σ' selon la formule

$$\sigma' = \sqrt{C + \frac{R}{2}},$$

- calcul de la moyenne de tous les σ' déterminés sur un trajet entre deux stations de base pour obtenir $\overline{\sigma}$,
- calcul de la valeur de seuil optimale t et de la valeur d'hystérésis optimale h avec l'écart-type moyenné $\overline{\sigma}$ selon:

$$h = -2 \cdot \overline{\sigma}' \cdot Q^{-1}(0,5+c)$$

$$t = \overline{\sigma} \cdot Q^{-1}(c)$$

9. Procédé selon l'une quelconque des revendications 1 à 8, **caractérisé en ce que** les valeurs de seuil t et valeurs d'hystérésis h optimales sont adaptatives pour des conditions ambiantes variables **en ce que** des conditions ambiantes variables entrent dans le calcul de la moyenne de l'écart-type.

10. Procédé selon la revendication 9, **caractérisé en ce que** les valeurs de seuil t et valeurs d'hystérésis h optimales sont adaptatives pour un comportement de mobilité variable des terminaux mobiles abonnés.

11. Unité de commande (1) pour optimiser un processus de décision pour commander des changements de cellule dans un réseau de téléphonie mobile cellulaire avec au moins une station de base par cellule et avec d'autres terminaux mobiles, équipés d'une régulation de puissance, dans laquelle l'unité de commande (1) est agencée de telle sorte
qu'elle mesure périodiquement et calcule périodiquement la moyenne de l'intensité de champ de réception de la cellule de desserte dans la position instantanée du terminal mobile,
qu'elle mesure périodiquement et calcule périodiquement la moyenne de l'intensité de champ de réception d'au moins une cellule voisine de la cellule de desserte dans la position instantanée du terminal mobile,
et prend une décision quant à un changement de cellule lorsque l'intensité de champ de réception de la cellule de desserte descend sous une valeur de seuil t et qu'en même temps l'intensité de champ de réception de la cellule voisine à l'emplacement du terminal mobile dépasse la valeur de seuil t de la cellule de desserte d'une valeur d'hystérésis h;
**caractérisée en ce que** l'unité de commande (1) est agencée de telle sorte qu'elle détermine cellule par cellule une valeur de seuil optimale (t) et une valeur d'hystérésis optimale (h) dans le réseau de téléphonie mobile à partir des intensités de champ de réception prédéfinies par la régulation de puissance, et **en ce que** la valeur d'hystérésis h et la valeur de seuil t sont réglables et adaptables à des conditions variables dans le réseau de téléphonie mobile et la valeur de seuil optimale t et la valeur d'hystérésis optimale h dépendent respectivement d'une variable commune c.

12. Unité de commande selon la revendication 11, **caractérisée par** un récepteur GPS intégré (2).

13. Unité de commande selon la revendication 11 ou 12, **caractérisée par** un module d'évaluation de données (3) pour commander, traiter et stocker des données de mesure radioélectrique.

14. Unité de commande selon la revendication 13, **caractérisée en ce que** le module d'évaluation de données (3) prend en charge les normes TETRA, GSM ou UMTS.

15. Unité de commande selon l'une quelconque des revendications 11 à 14, **caractérisée par** un module de configuration (4) pour le réglage côté réseau de la valeur de seuil optimisée t et de la valeur d'hystérésis optimisée h.

**Fig. 1**

**Fig. 2**

**Fig. 3**

**Fig. 4**

Fig. 5

Fig. 6

Fig. 7

Fig. 8

Fig. 9

Fig. 10

Fig. 11

Anzahl Cell Reselections (N_CR)

Fig. 12

Anzahl Cell Reselections (N_CR)

Fig. 13

Fig. 14

Fig. 15

Fig. 16

1

GPS-
Empfänger

1a

3

Steuerung
Verarbeitung
Speicherung

2

GPS

4

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03105520 A

**In der Beschreibung aufgeführte Nicht-Patentliteratur**

- **VENUGOPAL V. ; VEERAVALLI.** A locally optimal handoff Algorithm for cellular communications. *IEEE Transactions on vehicular technology,* August 1997, vol. 46 (3), 603-609